(19) Europäisches Patentamt / European Patent Office / Office européen des brevets

(11) **EP 3 792 679 B1**

(12) **EUROPEAN PATENT SPECIFICATION**

(45) Date of publication and mention of the grant of the patent:
**21.08.2024   Bulletin 2024/34**

(21) Application number: **19800777.5**

(22) Date of filing: **17.04.2019**

(51) International Patent Classification (IPC):
$G02B\ 26/08$ (2006.01)   $G01S\ 7/481$ (2006.01)
$G01J\ 5/48$ (2022.01)   $G01J\ 1/04$ (2006.01)
$G01J\ 3/02$ (2006.01)   $G01J\ 3/10$ (2006.01)
$G01J\ 3/36$ (2006.01)   $G01J\ 5/0803$ (2022.01)
$G01J\ 5/08$ (2022.01)   $G01S\ 17/894$ (2020.01)
$G02B\ 26/10$ (2006.01)   $G01J\ 5/06$ (2022.01)

(52) Cooperative Patent Classification (CPC):
G02B 26/0833; G01J 3/027; G01J 3/108;
G01J 3/36; G01J 5/064; G01J 5/0803;
G01J 5/0893; G01S 7/4816; G01S 17/894;
G02B 26/105

(86) International application number:
**PCT/JP2019/016470**

(87) International publication number:
**WO 2019/216139 (14.11.2019 Gazette 2019/46)**

(54) **ELECTROMAGNETIC WAVE DETECTION DEVICE AND INFORMATION ACQUISITION SYSTEM**

VORRICHTUNG ZUR DETEKTION ELEKTROMAGNETISCHER WELLEN UND INFORMATIONSERFASSUNGSSYSTEM

DISPOSITIF DE DÉTECTION D'ONDES ÉLECTROMAGNÉTIQUES ET SYSTÈME D'ACQUISITION D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **08.05.2018   JP 2018090180**

(43) Date of publication of application:
**17.03.2021   Bulletin 2021/11**

(73) Proprietor: **Kyocera Corporation**
**Kyoto-shi, Kyoto 612-8501 (JP)**

(72) Inventors:
• **TAKEUCHI Eri**
  **Kyoto-shi, Kyoto 612-8501 (JP)**
• **MINAGAWA Hiroyuki**
  **Kyoto-shi, Kyoto 612-8501 (JP)**

(74) Representative: **Viering, Jentschura & Partner mbB**
**Patent- und Rechtsanwälte**
**Am Brauhaus 8**
**01099 Dresden (DE)**

(56) References cited:
EP-A1- 2 603 828        EP-A1- 2 957 926
JP-A- 2003 090 712      JP-A- 2013 150 146
JP-A- 2013 150 146      JP-A- 2013 535 931
US-A1- 2003 132 405     US-A1- 2015 378 023
US-A1- 2017 299 697

EP 3 792 679 B1

**Description**

TECHNICAL FIELD

The present disclosure relates to an electromagnetic wave detection apparatus.

BACKGROUND

Conventionally, a configuration in which an image sensor further forms an image of an image formed and reflected by a mirror device is known (e.g., see PTL 1).

EP 2 603 828 A1 discloses mechanisms for increasing the rate of acquisition of compressed/encoded image representations. An imaging system may deliver subsets of a modulated light stream onto respective light sensing devices. The light sensing devices may be sampled in parallel. Samples from each light sensing device may be used to construct a respective sub-image of a final image. The parallelism allows compressed images to be acquired at a higher rate. The number of light sensing devices and/or the number of pixels per image may be selected to achieve a target image acquisition rate. In another embodiment, spatial portions of the incident light stream are separated and delivered to separate light modulators. In yet another embodiment, the incident light stream is split into a plurality of beams, each of which retains the image present in the incident light stream and is delivered to a separate light modulator.

CITATION LIST

Patent Literature

PTL 1: Japanese Patent No. 3507865

SUMMARY

The invention provides an electromagnetic wave detection apparatus according to claim 1. Further embodiments are described in the dependent claims

BRIEF DESCRIPTION OF THE DRAWINGS

In the following, the embodiment referred to in the context of FIG. 1 to FIG. 8 as a first embodiment is an embodiment not covered by the claims.

FIG. 1 is a diagram illustrating an example configuration of an electromagnetic wave detection apparatus according to a first embodiment;
FIG. 2 is a diagram explaining an incident angle of electromagnetic waves incident on a third surface;
FIG. 3 is a block diagram illustrating an example configuration of the electromagnetic wave detection apparatus according to the first embodiment;
FIG. 4 is a block diagram illustrating an example configuration of an information acquisition system according to an embodiment;
FIG. 5 is a diagram illustrating an example configuration of an electromagnetic wave detection apparatus according to a comparative example;
FIG. 6 is a diagram illustrating an example configuration in which a second propagation unit includes two prisms;
FIG. 7 is a diagram illustrating an example configuration in which the second propagation unit further includes an intermediate layer;
FIG. 8 is a diagram illustrating an incident angle of electromagnetic waves with respect to a fourth surface;
FIG. 9 is a diagram illustrating an example configuration of an electromagnetic wave detection apparatus according to a second embodiment;
FIG. 10 is a block diagram illustrating an example configuration of the electromagnetic wave detection apparatus according to the second embodiment;
FIG. 11 is a diagram illustrating an example configuration in which the second propagation unit further includes a separator;
FIG. 12 is a diagram illustrating an example configuration in which the second propagation unit includes the separator and an intermediate layer;
FIG. 13 is a diagram illustrating an example configuration in which the second propagation unit includes two prisms;
FIG. 14 is a diagram illustrating an example configuration in which the second propagation unit includes an intermediate layer between the two prisms; and
FIG. 15 is a diagram illustrating an example configuration in which the second propagation unit includes a separator and the intermediate layer between the two prisms.

DETAILED DESCRIPTION

Hereinafter, embodiments according to the present disclosure will be described in detail with reference to the drawings. The drawings used in the following description are schematic. The dimensions and ratios in the drawings are not necessarily drawn to scale.

(First Embodiment)

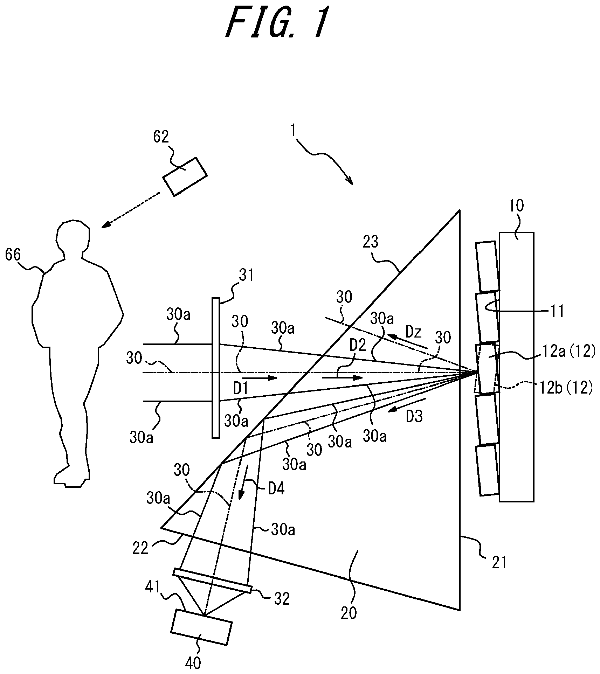

A secondary imaging optical system using a digital micromirror device (DMD: Digital Mirror Device) or the like may include a first lens to form an image of incident light on the DMD and a second lens to form an image of reflected light from the DMD on a sensor. Because of characteristics of the DMD, an angle formed by incident light and reflected light can be relatively small. When the angle formed by incident light and reflected light is small, reflected light tends to be blocked by the first lens. When reflected light is blocked, vignetting of reflected light may occur. Vignetting of reflected light may reduce a level of light in an image obtained by forming an image of reflected light and also cause variations in the level of light at each angle of view. Further, when the angle formed by incident light and reflected light is small, sizes or positions of the first and second lenses can be limited. To avoid such problems, a back focus of the first lens may be lengthened, although it may cause enlargement of an optical system, deteriorate an imaging performance of a lens, and limit angle widening. The electromagnetic wave detection apparatus 1 according to an embodiment of the present disclosure as illustrated in FIG. 1 controls a propagation direction of reflected light from the DMD and thus can secure a level of light incident on the sensor without lengthening the back focus of the first lens and reduce variations in the level of light at each angle of view. Because the back focus of the first lens is not lengthened, the optical system can be downsized and widened, whereby an imaging performance of the optical system can be improved.

As illustrated in FIG. 1, the electromagnetic wave detection apparatus 1 according to the first embodiment includes a first propagation unit 10, a second propagation unit 20, and a first detector 40. The electromagnetic wave detection apparatus 1 detects electromagnetic waves incident from a detection object 66. The electromagnetic wave detection apparatus 1 controls a propagation direction of electromagnetic waves using the first propagation unit 10 and the second propagation unit 20. The electromagnetic wave detection apparatus 1 causes electromagnetic waves to propagate along, for example, a propagation axis 30 illustrated in FIG. 1. The propagation axis 30 corresponds to a principal ray at each angle of view when the electromagnetic waves are light. The electromagnetic waves propagating along the propagation axis 30 contain a predetermined spread range represented by a light flux 30a. The electromagnetic wave detection apparatus 1 causes electromagnetic waves to be incident on the first detector 40, and the first detector 40 detects the electromagnetic waves. The first detector 40 is also simply referred to as a detector.

The first propagation unit 10 includes a reference surface 11 and a plurality of pixels 12 positioned along the reference surface 11. It can be said that the plurality of pixels 12 are arranged along the reference surface 11. The pixels 12 can change a propagation direction of electromagnetic waves incident on the reference surface 11. Each of the pixels 12 can cause the electromagnetic waves incident on the reference surface 11 to transition to one of a first state to propagate in a predetermined direction and a second state to propagate in a direction different from the predetermined direction. The first propagation unit 10 may cause each of the pixels 12 to transition to one of the first state and the second state. The first propagation unit 10 may further include a processor configured to control the transition of each of the pixels 12. Each of the pixels 12 transitions to one of the first state or the second state and thus causes the electromagnetic waves incident on the reference surface 11 to propagate in a particular direction. The pixel 12 transitioned to the first state is represented by a pixel 12a indicated by a solid line. The pixel 12 transitioned to the second state is represented by a pixel 12b indicated by a broken line.

The pixel 12 may contain a reflection surface that reflects electromagnetic waves incident on the reference surface 11. The first propagation unit 10 may determine a reflection direction of the electromagnetic waves incident on the reference surface 11 by controlling an orientation of the reflecting surface of each of the pixels 12. The orientation of the reflection surface of each of the pixels 12 may be associated with each of the first state and the second state. That is, the first propagation unit 10 may determine the reflecting direction of the electromagnetic waves by changing the orientation of the reflecting surface of the pixel 12 between the first state and the second state to which the pixel 12 transitions. The first propagation unit 10 may include a mirror device such as a DMD or a MEMS (microelectromechanical systems) mirror. The pixels 12 may be a mirror element. The reference surface 11 may be an array surface of mirror elements.

The pixels 12 of the first propagation unit 10 may include respective shutters each of which includes a reflection surface to reflect electromagnetic waves. When the shutter is open, electromagnetic waves are transmitted and propagate in a predetermined direction. An opening state of the shutter is associated with the first state. When the shutter is closed, electromagnetic waves are reflected and propagate in a direction different from the predetermined direction. A closed state of the shutter is associated with the second state. In a case in which the pixels 12 include the respective shutters, the first propagation unit 10 may include a MEMS shutter containing shutters that are arranged in an array along the reference surface 11 and can be controlled to open and close.

The pixels 12 of the first propagation unit 10 may include respective liquid crystal shutters. By controlling an alignment state of the liquid crystal, the liquid crystal shutter transitions to one of a transmission state to transmit electromagnetic waves or a reflection state to reflect the electromagnetic waves. Each the transmission state and the reflection state are associated with the first state and the second state, respectively.

The electromagnetic wave detection apparatus 1 may further include a first image forming unit 31. The first image forming unit 31 may form an image of an incident electromagnetic waves on the reference surface 11. That is, the first image forming unit 31 may be an optical member having an image forming point positioned on the reference surface 11. The first image forming unit 31 may be an optical member including at least one of a lens and a mirror. The first image forming unit 31 may form an image on the reference surface 11 by refracting the incident electromagnetic waves containing the light flux 30a in a manner to narrow the light flux 30a.

The first detector 40 may include a first detection surface 41. The first detection surface 41 is also simply referred to as a detection surface. The first detector 40 may include at least one detection element on the first detection surface 41. The first detector 40 may detect electromagnetic waves incident on the first detection surface 41. The first detector 40 may detect an intensity of the electromagnetic waves incident on the first detection surface 41. In this case, the first detector 40 does not need to detect the electromagnetic waves as an image.

The first detector 40 may include detection elements arranged in an array along the first detection surface 41. The first detector 40 may include an imaging element such as, for example, an image sensor or an imaging array. In this case, the first detector 40 may capture an image formed from the electromagnetic waves incident on the first detection surface 41 and generate image information.

The first detector 40 may capture an image formed from visible light. The first detector 40 is not limited to capture an image formed from visible light and may capture an image formed from infrared light, ultraviolet, or other radio waves. The first detector 40 may include a distance measuring sensor. In a case in which the first detector 40 includes the distance measuring sensor, the electromagnetic wave detection apparatus 1 can acquire image-like distance information using the first detector 40. The first detector 40 may include a temperature sensor. In a case in which the first detector 40 includes the temperature sensor, the electromagnetic wave detection apparatus 1 can acquire image-like temperature information using the first detector 40.

The first detector 40 may include a single detection element. The single detection element may be an APD (avalanche photodiode), a PD (photodiode), a SPAD (Single-photon avalanche diode), a millimeter wave sensor, a submillimeter wave sensor, a distance measuring image sensor, or the like. The first detector 40 may include a detection element array. The detection element array may be an APD array, a PD array, an MPPC (Multi Photon Pixel Counter), a distance measuring imaging array, the distance measuring image sensor, or the like.

The electromagnetic wave detection apparatus 1 may further include a second image forming unit 32. The second image forming unit 32 may form an image of electromagnetic waves caused to be incident on the first detector 40 by the first propagation unit 10 and the second propagation unit 20, on the first detection surface 41. That is, the second image forming unit 32 may be an optical member having an image forming point positioned on the first detection surface 41. The second image forming unit 32 may be an optical member including at least one of a lens and a mirror. The second image forming unit 32 may form an image on the first detection surface 41 by refracting incident electromagnetic waves containing the light flux 30a in a manner to narrow the light flux 30a. The first detector 40 may capture the image formed on the first detection surface 41 by the second image forming unit 32.

In a case in which the first detector 40 is configured using one element, an image of the electromagnetic waves does not need to be formed on the first detection surface 41. In this case, the first detector 40 does not need to be arranged at or near a secondary image forming position, which is an image forming position of the second image forming unit 32. That is, the first detector 40 may be arranged at any position that can cause electromagnetic waves emitted from the second propagation unit 20 to be incident on the first detection surface 41.

The electromagnetic wave detection apparatus 1 may further include a irradiator 62. The irradiator 62 radiates electromagnetic waves to the detection object 66 detected by the first detector 40. The first detector 40 may detect the detection object 66 by detecting reflected waves from the detection object 66. The irradiator 62 may radiate at least one of infrared light, visible light, ultraviolet, and radio waves. The irradiator 62 may include, for example, an LED (light-emitting diode), an LD (laser diode), or the like.

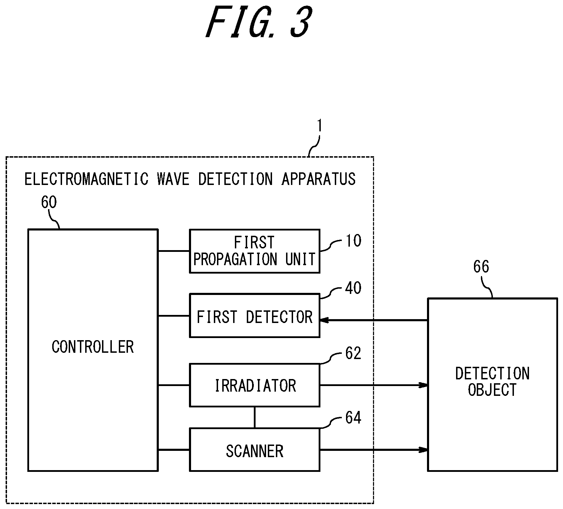

The electromagnetic wave detection apparatus 1 may map information detected from the detection object 66 by scanning the electromagnetic waves radiated from the irradiator 62. The irradiator 62 may scan the electromagnetic waves by employing a phased scan method to change a radiation direction of the electromagnetic waves by controlling a phase of a radiated electromagnetic waves. The electromagnetic wave detection apparatus 1 may further include a scanner 64 (see FIG. 3) configured to scan the electromagnetic waves radiated by the irradiator 62. The scanner 64 may include a scanning reflection surface to reflect the electromagnetic waves radiated by the irradiator 62 and scan the electromagnetic waves by changing an orientation of the scanning reflection surface. The scanner 64 may include at least one of a MEMS mirror, a polygon mirror, and a galvanometer mirror.

In a case in which the electromagnetic wave detection apparatus 1 radiates electromagnetic waves to the detection object 66 from the irradiator 62, the first detector 40 may be an active sensor configured to detect reflected waves of the electromagnetic waves radiated to the detection object 66 from the irradiator 62. The first detector 40 may be a passive sensor to detect electromagnetic waves incident from the detection object 66, regardless of whether the electromagnetic waves are radiated from the irradiator 62.

The second propagation unit 20 includes a first surface 21, a second surface 22, and a third surface 23. The first surface 21 opposes the reference surface 11 of the first propagation unit 10. The second surface 22 opposes the first detection surface 41 of the first detector 40. In a case in which the electromagnetic wave detection apparatus 1 includes the second image forming unit 32, the second surface 22 opposes the first detection surface 41 via the second image forming unit 32. The third surface 23 intersects each of the first surface 21 and the second surface 22.

The second propagation unit 20 may include a prism that contains at least three surfaces. In this case, each of the first surface 21, the second surface 22, and the third surface 23 of the second propagation unit 20 may be associated with each of prism surfaces. The second propagation unit 20 may be a triangle containing the first surface 21, the second surface 22 and the third surface 23 as its sides in a plan view presenting the propagation axis 30 of the electromagnetic waves, as illustrated in FIG. 1 by way of example. The second propagation unit 20 may be a polygon such as a quadrangle that also includes another surface as its side in a plan view presenting the propagation axis 30 of the electromagnetic waves. Each surface of the prism may be treated with antireflection coating or the like.

Each element of the electromagnetic wave detection apparatus 1 controls the propagation direction of the electromagnetic waves, whereby the electromagnetic waves can propagate along the propagation axis 30 illustrated in FIG. 1 by way of example.

The electromagnetic waves propagate in a first direction represented by D1 and are incident on the third surface 23. In a case in which the electromagnetic wave detection apparatus 1 includes the first image forming unit 31, the electromagnetic waves propagate in the first direction after passing through the first image forming unit 31 and are incident on the third surface 23. The third surface 23 causes the electromagnetic waves to propagate in a second direction represented by D2. That is, the electromagnetic waves are incident on the third surface 23 after propagating in the first direction and then propagate in the second direction. The electromagnetic waves can be refracted at the third surface 23 and change its propagation direction. That is, the first direction and the second direction may be different directions. When the electromagnetic waves are perpendicularly incident on the third surface 23, the electromagnetic waves can propagate straight without being refracted at the third surface 23. That is, the first direction and the second direction may be the same direction.

The electromagnetic waves propagate in the second direction within the second propagation unit 20 and exit from the first surface 21. The second direction may be orthogonal to the first surface 21. The electromagnetic waves then propagate to the reference surface 11 of the first propagation unit 10. That is, the first surface 21 emits the electromagnetic waves propagating in the second direction to the reference surface 11. The first surface 21 may be parallel to the reference surface 11. The propagation direction of the electromagnetic waves caused to be incident on the reference surface 11 by the first surface 21 may be orthogonal to the reference surface 11.

The electromagnetic waves are reflected by the pixels 12 of the first propagation unit 10 and re-enter the first surface 21. After re-entering the first surface 21, the electromagnetic waves propagate in a third direction represented by D3. The electromagnetic waves reflected by the pixels 12 propagate in the third direction when the pixels 12 has transitioned to the first state. On the other hand, when the pixels 12 transition to the second state, the electromagnetic waves propagate in a direction represented by Dz and are emitted from the third surface 23, and do not reach the first detector 40.

The electromagnetic waves propagate in the third direction within the second propagation unit 20 and reaches the third surface 23. The electromagnetic waves are reflected by the third surface 23 and propagate in a fourth direction represented by D4. That is, the third surface 23 reflects the electromagnetic waves propagating in the third direction within the second propagation unit 20 and causes the electromagnetic waves to propagate in the fourth direction. The electromagnetic waves may undergo total reflection by the third surface 23. That is, the third surface 23 may cause total reflection of the electromagnetic waves propagating in the third direction within the second propagation unit 20.

The electromagnetic waves propagate in the fourth direction within the second propagation unit 20 and exit from the second surface 22. The fourth direction may be orthogonal to the second surface 22. The electromagnetic waves then propagate to the first detection surface 41 of the first detector 40. That is, the second surface 22 emits the electromagnetic waves propagating in the fourth direction to the first detection surface 41. The second surface 22 may be parallel to the first detection surface 41. The propagation direction of the electromagnetic waves emitted by the second surface 22 may be orthogonal to the first detection surface 41.

In a case in which the electromagnetic wave detection apparatus 1 includes the second image forming unit 32, the electromagnetic waves pass through the second image forming unit 32 after being emitted from the second surface 22 and are incident on the first detection surface 41. A principal plane of the second image forming unit 32 may be parallel to the first detection surface 41. The principal plane of the second image forming unit 32 may be parallel to the second surface 22.

As described above, the electromagnetic wave detection apparatus 1 can control whether to cause the electromagnetic waves incident from the third surface 23 to be incident on the first detection surface 41, by causing the pixels 12 of the first propagation unit 10 to transition to one of the first state or the second state.

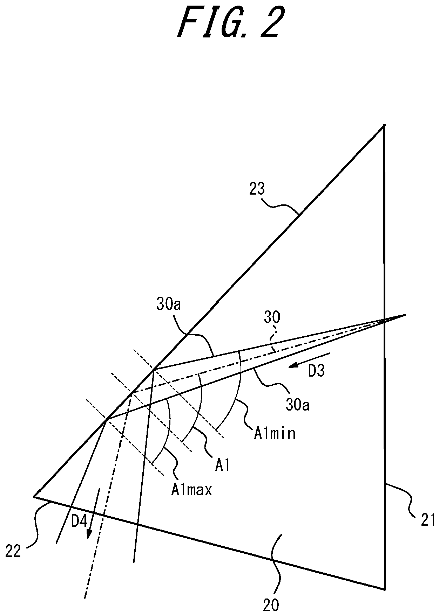

Within the second propagation unit 20, as illustrated in FIG. 2, the electromagnetic waves propagating in the third direction represented by D3 along the propagation axis 30 are incident on the third surface 23 at an incident angle represented by A1. The third surface 23 corresponds to a boundary surface between the second propagation unit 20 and its externality. When $\mu$ represents a refractive index of the externality and $\alpha$ represents a refractive index of the second propagation unit

20, $\alpha > \mu$ is satisfied. In a case in which the incident angle (A1) of the electromagnetic waves with respect to the third surface 23 is equal to or larger than a critical angle, the electromagnetic waves incident on the third surface 23 undergo total reflection by the third surface 23. When the critical angle in the example of FIG. 2 is represented by CA1, the following equation (1) is satisfied.

$$\sin(CA1) = \mu/\alpha \quad (1)$$

Even when the electromagnetic waves are propagating along the propagation axis 30 as a whole, the electromagnetic waves may include a component propagating obliquely with respect to the propagation axis 30 within a range of the light flux 30a, in addition to a component propagating along the propagation axis 30. For example, the light flux 30a of the electromagnetic waves propagating in the third direction in FIG. 2 spreads as it propagates farther along the propagation axis 30. In this case, the electromagnetic waves can be incident on the third surface 23 at an incident angle within a range from an angle represented by A1min to an angle represented by A1max. In a case in which an angle from A1min to A1max is equal to or larger than the critical angle (CA1) based on the above equation (1), the electromagnetic waves incident on the third surface 23 undergo total reflection by the third surface 23. The second propagation unit 20 may be configured such that the incident angle (A1) of the electromagnetic waves is equal to or larger than the critical angle (CA1). For example, a value of the refractive index ($\alpha$) of the second propagation unit 20 or an angle of the third surface 23 with respect to the first surface 21 may be determined such that the incident angle (A1) of the electromagnetic waves is equal to or greater than the critical angle (CA1).

Even when the first detector 40 does not detect the electromagnetic waves as an image, the electromagnetic wave detection apparatus 1 can acquire an image formed from the electromagnetic waves as image information by causing the plurality of pixels 12 of the first propagation unit 10 to transition to the first state one by one. For example, the electromagnetic wave detection apparatus 1 can detect the electromagnetic waves in one-dimension or two-dimension by synchronizing the state of the pixels 12 and the detection result by the first detector 40.

The electromagnetic wave detection apparatus 1 may further include a controller 60, as illustrated in FIG. 3. The controller 60 can control the propagation direction of the electromagnetic waves by controlling the first propagation unit 10. The controller 60 may acquire the detection result of the electromagnetic waves from the first detector 40. The controller 60 may acquire image information regarding an image formed from the electromagnetic waves from the first detector 40. The controller 60 may acquire the image information regarding the image formed from the electromagnetic waves by synchronizing the control of each of the pixels 12 of the first propagation unit 10 and the detection result acquired from the first detector 40. The controller 60 may control radiation or scanning of the electromagnetic waves by controlling the irradiator 62 or the scanner 64. The controller 60 may acquire the image information regarding the image formed from the electromagnetic waves, based on the control associated with the radiation or scanning of the electromagnetic waves and the detection result acquired from the first detector 40.

In a case in which the first detector 40 is a distance measuring sensor, the controller 60 may acquire distance information. The controller 60 may acquire the distance information regarding the detection object 66, based on the detection result acquired from the first detector 40, by employing a ToF (Time of Flight) method. The controller 60 may execute, as the ToF method, a DirectToF method that directly measures time from radiation of electromagnetic waves to detection of the reflected waves. As the ToF method, the controller 60 may execute a FlashTof method in which electromagnetic waves are periodically radiated and time from radiation of the electromagnetic waves to detection of the reflected waves is indirectly measured, based on a phase of the radiated electromagnetic waves and a phase of the reflected waves. The controller 60 may execute another method such as PhasedToF as the ToF method. The controller 60 may execute the ToF method by causing the irradiator 62 to radiate the electromagnetic waves.

The controller 60 may include, for example, a time measurement LSI (Large Scale Integrated circuit). The controller 60 may calculate, as a response time, time elapsed from time at which the electromagnetic waves are radiated by the irradiator 62 to time at which the reflected waves from the detection object 66 is detected by the first detector 40. The controller 60 may calculate a distance to the detection object 66, based on the response time. When the controller 60 causes the irradiator 62 or the scanner 64 to scan the electromagnetic waves, the controller 60 may create image-like distance information by synchronizing the radiation direction of the electromagnetic waves and the detection result acquired from the first detector 40.

In a case in which the first detector 40 is a temperature sensor, the controller 60 may acquire temperature information. The controller 60 may acquire information regarding the surroundings of the electromagnetic wave detection apparatus 1, based on the detection result of the electromagnetic waves acquired from the first detector 40. The information regarding the surroundings may include at least one of image information, distance information, and temperature information.

The controller 60 includes one or more processors and a memory. The processor may include at least one of a general purpose processor configured to read a specific program and perform a specific function and a specialized processor dedicated for specific processing. The specialized processor may include an ASIC (Application Specific Integrated Circuit). The processor may include a PLD (Programmable Logic Device). The PLD may include an FPGA (Field-Programmable Gate Array). The controller 60 may include at least one of a SoC (System-on-a-Chip) that includes one or more cooperating processors and a SiP (System in a Package).

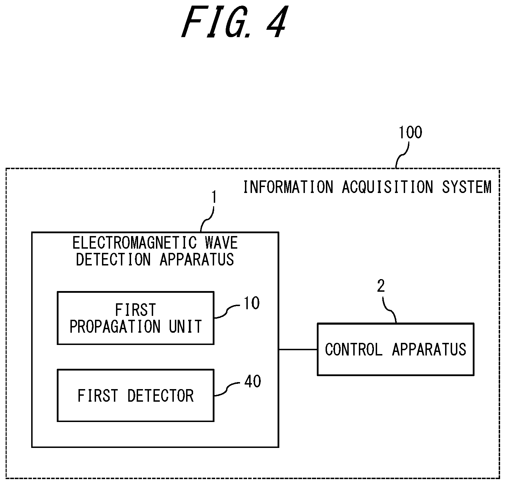

An information acquisition system 100 according to the embodiment includes the electromagnetic wave detection apparatus 1 and a control apparatus 2, as illustrated in FIG. 4. The control apparatus 2 may acquire information regarding the surroundings of the electromagnetic wave detection apparatus 1, based on the detection result of the electromagnetic waves by the first detector 40. The information regarding the surroundings may include at least one of image information, distance information, and temperature information.

In the electromagnetic wave detection apparatus 1 according to the present embodiment, the third surface 23 of the second propagation unit 20 causes the electromagnetic waves incident thereon along the propagation axis 30 to propagate in the second direction and, simultaneously, reflects the electromagnetic waves propagating in the third direction and causes them to propagate to the second surface 22.

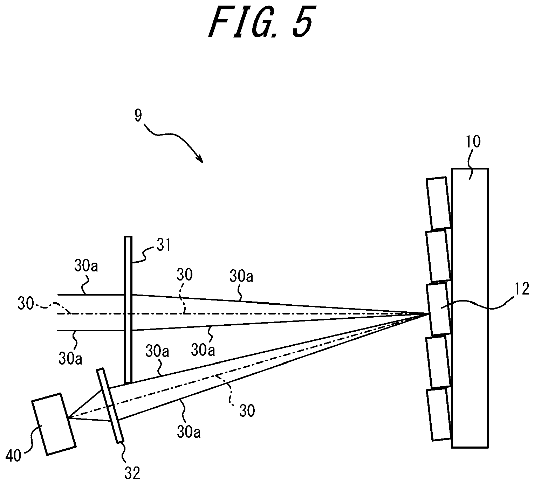

On the other hand, an electromagnetic wave detection apparatus 9 according to a comparative example illustrated in FIG. 5 does not include the second propagation unit 20. In the electromagnetic wave detection apparatus 9 according to the comparative example, the electromagnetic waves propagating along the propagation axis 30 are reflected by the first propagation unit 10 and incident on the first detector 40. In this case, the first detector 40 is positioned near the electromagnetic waves incident on the electromagnetic wave detection apparatus 9 and may affect the electromagnetic waves. In a case in which the electromagnetic wave detection apparatus 1 includes the second image forming unit 32, the second image forming unit 32 is positioned near the electromagnetic waves incident on the electromagnetic wave detection apparatus 9 and may affect the electromagnetic waves. In a case in which the electromagnetic wave detection apparatus 1 includes the first image forming unit 31, the first image forming unit 31 may affect the electromagnetic waves that are reflected by the first propagation unit 10 and propagate to the first detector 40. When the first detector 40 or the second image forming unit 32 affects the electromagnetic waves, a level of the electromagnetic waves incident on the first detector 40 may be reduced. If a back focus of the first image forming unit 31 is lengthened, the first detector 40 may be arranged apart from the first image forming unit 31. However, when the back focus of the first image forming unit 31 is lengthened, the size of the electromagnetic wave detection apparatus 9 is increased as a whole.

The electromagnetic wave detection apparatus 1 according to the present embodiment includes the second propagation unit 20 and thus can cause the electromagnetic waves to propagate to the second surface 22.

In a case in which the electromagnetic waves propagate to the second surface 22, the first detector 40 can be arranged apart from the electromagnetic waves to be incident on the electromagnetic wave detection apparatus 1, in a manner different from the electromagnetic wave detection apparatus 9. In a case in which the electromagnetic wave detection apparatus 1 includes the first image forming unit 31, the second propagation unit 20 is provided in an area of the back focus of the first image forming unit 31, whereby the first detector 40 can be arranged apart from the first image forming unit 31, in a manner different from the electromagnetic wave detection apparatus 9. In this way, the level of the electromagnetic waves incident on the first detector 40 can be secured. In this case, the back focus of the first image forming unit 31 does not need to be longer than that of the electromagnetic wave detection apparatus 9. That is, the electromagnetic wave detection apparatus 1 includes the second propagation unit 20, whereby the electromagnetic wave detection apparatus 1 can be downsized as a whole and, further, can secure the level of the electromagnetic waves incident on the first detector 40. Because the electromagnetic wave detection apparatus 1 includes the second propagation unit 20, an influence on an incident electromagnetic waves can be reduced without increasing the size of the electromagnetic wave detection apparatus 1.

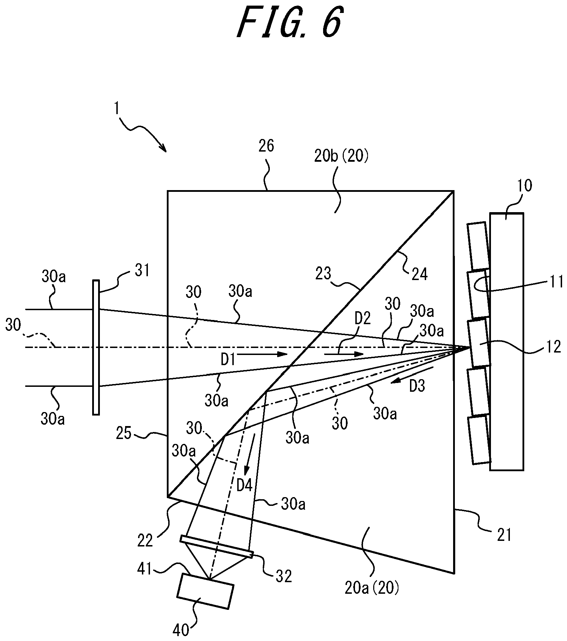

In the electromagnetic wave detection apparatus 1 according to the embodiment, the second propagation unit 20 may include a first prism 20a and a second prism 20b, as illustrated in FIG. 6. A refractive index of the second prism 20b is smaller than a refractive index of the first prism 20a. The first prism 20a contains a first surface 21, a second surface 22, and a third surface 23. The second prism 20b contains a fourth surface 24, a fifth surface 25, and a sixth surface 26. That is, each of the first prism 20a and the second prism 20b contains at least three surfaces. The fourth surface 24 of the second prism 20b forms a boundary surface between the first prism 20a and the second prism 20b, together with the third surface 23 of the first prism 20a. The fifth surface 25 of the second prism 20b intersects the direction in which the electromagnetic waves are incident on the second propagation unit 20. The sixth surface 26 of the second prism 20b intersects the fourth surface 24 and the fifth surface 25. The second prism 20b may be a triangle containing the fourth surface 24, the fifth surface 25, and the sixth surface 26 as its sides in a plan view presenting the propagation axis 30 of the electromagnetic waves, as illustrated in FIG. 6 by way of example. The second prism 20b may be a polygon such as a quadrangle that also contains another surface as its side in a plan view including the propagation axis 30 of the electromagnetic waves.

The electromagnetic waves may propagate along the propagation axis 30 illustrated in FIG. 6 by way of example. The electromagnetic waves are incident on the fifth surface 25 of the second prism 20b. In a case in which the electromagnetic wave detection apparatus 1 includes the first image forming unit 31, the electromagnetic waves are incident on the fifth surface 25 after passing through the first image forming unit 31. The principal plane of the first image forming unit 31 may be parallel to the fifth surface 25. A direction in which the electromagnetic waves are caused to be incident on the fifth surface 25 by the first image forming unit 31 may be orthogonal to the fifth surface 25. The fifth surface 25 causes the incident electromagnetic waves to propagate in the first direction represented by D1. That is, the electromagnetic waves propagate in the first direction within the second prism 20b.

The electromagnetic waves propagating in the first direction exits from the fourth surface 24 and are then incident on the third surface 23 of the first prism 20a. That is, the electromagnetic waves pass through the boundary surface between the first prism 20a and the second prism 20b. The fourth surface 24 or the third surface 23 causes the electromagnetic waves to propagate in the second direction represented by D2. That is, the electromagnetic waves propagate in the second direction after passing through the boundary surface. The electromagnetic waves may be refracted at the boundary surface between the first prism 20a and the second prism 20b and change its propagation direction. That is, the first direction and the second direction may be different directions. When the electromagnetic waves are perpendicularly incident on the boundary surface, the electromagnetic waves can propagate straight without being refracted at the boundary surface. That is, the first direction and the second direction may be the same direction.

The electromagnetic waves propagating in the second direction within the first prism 20a can propagate along the propagation axis 30 and thus are emitted to and re-enter the first surface 21, reflected by the third surface 23, emitted from the second surface 22, and then incident on the first detection surface 41.

In a case in which the third surface 23 of the first prism 20a serves as a boundary surface between the first prism 20a and the second prism 20b, the critical angle of the electromagnetic waves incident on the third surface 23 is determined based on refractive indices of the first prism 20a and the second prism 20b. When $\beta$ represents the refractive index of the first prism 20a and $\gamma$ represents the refractive index of the second prism 20b, it is assumed that $\gamma < \beta$ is satisfied. When CA2 represents the critical angle of the electromagnetic waves incident on the boundary surface between the first prism 20a and the second prism 20b, the following equation (2) is satisfied.

$$\sin (CA2) = \gamma / \beta \quad (2)$$

As illustrated in FIG. 6 by way of example, because the second propagation unit 20 includes the second prism 20b, the third surface 23 of the first prism 20a can be protected. If a foreign matter such as water, oil, or dust adheres to the exterior of the third surface 23, it may hinder total reflection of the electromagnetic waves incident on the third surface 23 from the inside. By protecting the third surface 23, the condition for the total reflection on the third surface 23 can be maintained.

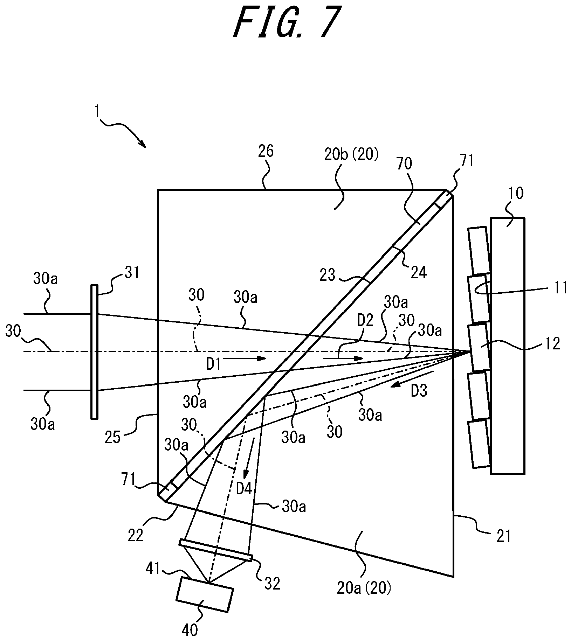

In the electromagnetic wave detection apparatus 1 according to the embodiment, as illustrated in FIG. 7, the second propagation unit 20 may further include an intermediate layer 70 positioned between the first prism 20a and the second prism 20b, in addition to the configuration illustrated in FIG. 6. The intermediate layer 70 may include at least one of vacuum, a gas, a liquid, a solid, and an amorphous. The intermediate layer 70 may include an air layer or a prism. A refractive index of the intermediate layer 70 is smaller than the refractive index of the first prism 20a. The refractive index of the second prism 20b may be the same as or different from the refractive index of the first prism 20a. The refractive index of the second prism 20b may be the same as or different from the refractive index of the intermediate layer 70. A spacer 71 is arranged to maintain a distance between the first prism 20a and the second prism 20b. That is, the spacer 71 is arranged to maintain a fixed thickness of the intermediate layer 70. In a case in which the intermediate layer 70 has a small fluidity or no fluidity at all, the spacer 71 may be omitted.

The third surface 23 of the first prism 20a forms a boundary surface between the first prism 20a and the intermediate layer 70. The fourth surface 24 of the second prism 20b forms a boundary surface between the second prism 20b and the intermediate layer 70.

The electromagnetic waves can propagate along the propagation axis 30 illustrated in FIG. 7 by way of example. The electromagnetic waves are incident on the fifth surface 25 of the second prism 20b. In a case in which the electromagnetic wave detection apparatus 1 includes the first image forming unit 31, the electromagnetic waves are incident on the fifth surface 25 after passing through the first image forming unit 31. The principal plane of the first image forming unit 31 may be parallel to the fifth surface 25. The direction in which the electromagnetic waves are caused to be incident on the fifth surface 25 by the first image forming unit 31 may be orthogonal to the fifth surface 25. The fifth surface 25 causes the incident electromagnetic waves to propagate in the first direction represented by D1. That is, the electromagnetic waves propagate in the first direction within the second prism 20b.

The electromagnetic waves propagating in the first direction exits from the fourth surface 24, passes through the intermediate layer 70, and are then incident on the third surface 23 of the first prism 20a. The third surface 23 causes the electromagnetic waves to propagate in the second direction represented by D2. That is, the electromagnetic waves propagate in the second direction after passing through the intermediate layer 70. The electromagnetic waves may be refracted at the boundary surface between the second prism 20b and the intermediate layer 70 and the boundary surface between the intermediate layer 70 and the first prism 20a and can change its propagation direction. The electromagnetic waves may propagate in the same direction as a result of the refraction at the boundary surface between the second prism 20b and the intermediate layer 70 and the boundary surface between the intermediate layer 70 and the first prism 20a. When the electromagnetic waves are perpendicularly incident on the boundary surface, the electromagnetic waves can propagate straight without being refracted at the boundary surface. That is, the first direction and the second direction may be the same direction.

The electromagnetic waves propagating in the second direction within the first prism 20a can propagate along the propagation axis 30 and thus are emitted to and re-enter the first surface 21, reflected by the third surface 23, emitted from the second surface 22, and then incident on the first detection surface 41.

In a case in which the third surface 23 of the first prism 20a serves as the boundary surface between the first prism 20a and the intermediate layer 70, the critical angle of the electromagnetic waves incident on the third surface 23 is determined based on the refractive indices of the first prism 20a and the intermediate layer 70. When $\beta$ represents the refractive index of the first prism 20a and $\delta$ represents the refractive index of the intermediate layer 70, it is assumed that $\delta < \beta$ is satisfied. When CA3 represents the critical angle of the electromagnetic waves incident on the boundary surface between the first prism 20a and the intermediate layer 70, the following equation (3) is satisfied.

$$\sin (CA3) = \delta/\beta \ (3)$$

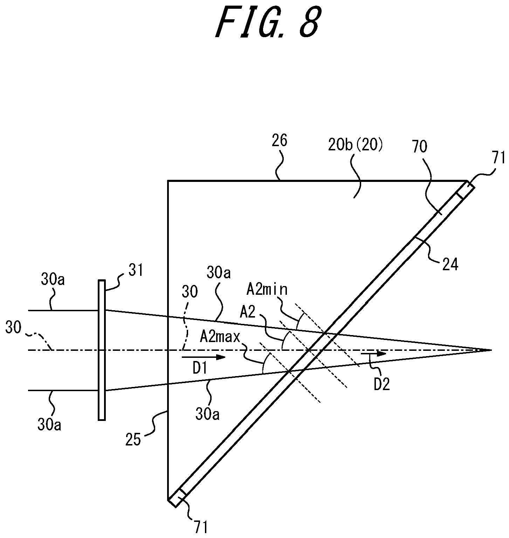

In a case in which the refractive index of the second prism 20b is larger than the refractive index of the intermediate layer 70, the electromagnetic waves propagating from the second prism 20b to the intermediate layer 70 can undergo total reflection by the boundary surface. As illustrated in FIG. 8, the electromagnetic waves propagating in the first direction along the propagation axis 30 within the second prism 20b are incident on the fourth surface 24 at an incident angle represented by A2. When $\gamma$ represents the refractive index of the second prism 20b and $\delta$ represents the refractive index of the intermediate layer 70, $\delta < \gamma$ is satisfied. When the incident angle (A2) of the electromagnetic waves on the fourth surface 24 is smaller than the critical angle, the electromagnetic waves incident on the fourth surface 24 can propagate to the intermediate layer 70 without undergoing total reflection by the fourth surface 24. When CA4 represents the critical angle in the example of FIG. 8, the following expression (4) is established.

$$\sin (CA4) = \delta/\gamma \ (4)$$

The electromagnetic waves may include a component propagating within the range of the light flux 30a, in addition to a component propagating along the propagation axis 30. In FIG. 8, for example, the light flux 30a of the electromagnetic waves propagating in the first direction becomes narrower as the electromagnetic waves further propagate along the propagation axis 30. In this case, the electromagnetic waves can be incident on the fourth surface 24 at an incident angle within a range from an angle represented by A2min to an angle represented by A2max. When the angle from A2min to A2max is smaller than the critical angle (CA4) based on the above equation (4), the electromagnetic waves incident on the fourth surface 24 do not undergo total reflection by the fourth surface 24. In this case, that is, the electromagnetic waves having incident on the fourth surface 24 are likely to be emitted to the intermediate layer 70. The second propagation unit 20 may be configured such that the incident angle (A2) of the electromagnetic waves is smaller than the critical angle (CA4). For example, the value of the refractive index ($\alpha$) of the second propagation unit 20 or the angle of the third surface 23 with respect to the first surface 21 may be determined such that the incident angle (A2) of the electromagnetic waves is smaller than the critical angle (CA4).

The configuration including the intermediate layer 70 between the first prism 20a and the second prism 20b as illustrated in FIG. 7 by way of example is also referred to as a total internal reflection prism. The total internal reflection prism is also called a TIR (TIR: Total Internal Reflection) prism. When the second propagation unit 20 includes the TIR prism as illustrated in FIG. 7 by way of example, a condition for total reflection on the third surface 23 is easily maintained. The intermediate layer 70 arranged between the first prism 20a and the second prism 20b can increase the flexibility of the refractive index and the shape of the second prism 20b.

(Second Embodiment)

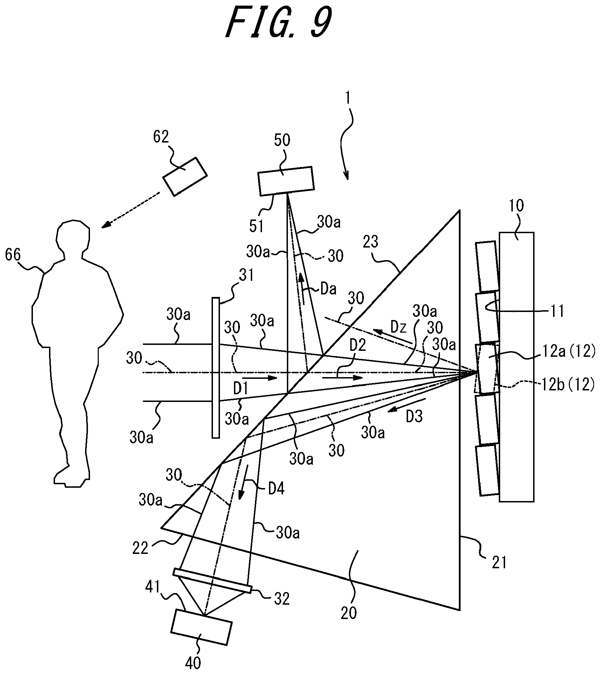

Elements denoted by the same reference numerals in the first and second embodiments may be configured in the same or similar manner. Electromagnetic waves can be detected by a plurality of sensors. In this case, when the plurality of sensors contain different detection axes, coordinate systems of results detected as image or the like may be different between the sensors. It is required to reduce a difference in the coordinate systems of the detection results of the sensors. A difference in the coordinate systems of the detection results is not easily reduced by correction. Further, a correction itself of the coordinate system can be impossible. The electromagnetic wave detection apparatus 1 according to an embodiment of the present disclosure as illustrated in FIG. 9 includes a configuration to separate the electromagnetic waves incident on the second propagation unit 20 and thus can reduce a difference in the coordinate systems of the detection results by a plurality of sensors.

The electromagnetic wave detection apparatus 1 according to the embodiment includes a first propagation unit 10, a second propagation unit 20, a first detector 40, and a second detector 50, as illustrated in FIG. 9. The first propagation unit 10, the second propagation unit 20, and the first detector 40 may be respectively configured to be the same as or similar to the first propagation unit 10, the second propagation unit 20, and the first detector 40 described in the first embodiment. The second detector 50 includes a second detection surface 51. The second detection surface 51 is also simply referred to as a detection surface. The second detector 50 may be configured to be the same as or similar to the first detector 40. The electromagnetic wave detection apparatus 1 detects electromagnetic waves incident from the detection object 66. The electromagnetic wave detection apparatus 1 controls a propagation direction of the electromagnetic waves using the first propagation unit 10 and the second propagation unit 20. The electromagnetic wave detection apparatus 1 causes the electromagnetic waves to propagate along, for example, the propagation axis 30 illustrated in FIG. 9. The propagation axis 30 corresponds to a principal ray at each angle of view, in a case in which the electromagnetic waves are light. The electromagnetic waves propagating along the propagation axis 30 have the predetermined spread range represented by the light flux 30a. The electromagnetic wave detection apparatus 1 causes the electromagnetic wavs to be incident on each of the first detector 40 and the second detector 50 and detects the electromagnetic waves using each of the first detector 40 and the second detector 50.

The second propagation unit 20 contains a first surface 21, a second surface 22, and a third surface 23. The first surface 21 opposes the reference surface 11 of the first propagation unit 10. The second surface 22 opposes the first detection surface 41 of the first detector 40. In a case in which the electromagnetic wave detection apparatus 1 includes the second image forming unit 32, the second surface 22 opposes the first detection surface 41 via the second image forming unit 32. The third surface 23 intersects each of the first surface 21 and the second surface 22.

The second propagation unit 20 may include a prism containing at least three surfaces. In this case, each of the first surface 21, the second surface 22, and the third surface 23 of the second propagation unit 20 may be associated with each of prism surfaces. The second propagation unit 20 may be a triangle containing the first surface 21, the second surface 22 and the third surface 23 as the three sides in a plan view presenting the propagation axis 30 of the electromagnetic waves, as illustrated in FIG. 1 by way of example. The second propagation unit 20 may be a polygon such as a quadrangle that also contains another surface as a side in a plan view presenting the propagation axis 30 of the electromagnetic waves. Each surface of the prism may be treated with antireflection coating or the like.

The electromagnetic wave detection apparatus 1 may further include a first image forming unit 31. The electromagnetic wave detection apparatus 1 may further include a second image forming unit 32. The first image forming unit 31 and the second image forming unit 32 may be configured to be the same as or similar to the first image forming unit 31 and the second image forming unit 32, respectively, described in the first embodiment.

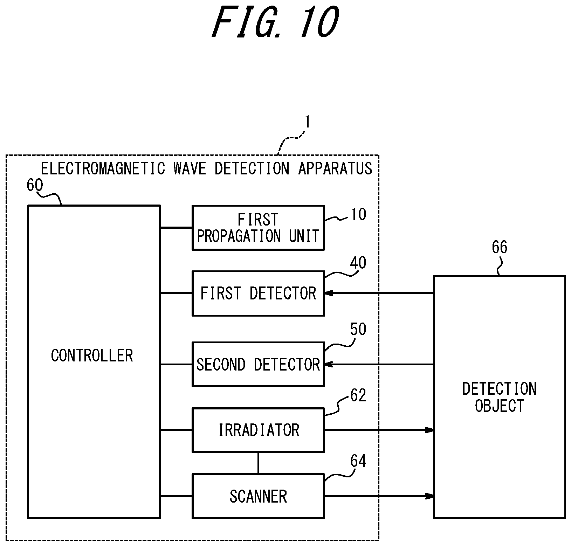

The electromagnetic wave detection apparatus 1 may further include a irradiator 62. The electromagnetic wave detection apparatus 1 may further include a scanner 64 (see FIG. 10). The irradiator 62 and the scanner 64 may be configured to be the same as or similar to the irradiator 62 and the scanner 64, respectively, described in the first embodiment. The irradiator 62 may include a first irradiator and a second irradiator. The first detector 40 may detect a reflected wave of the electromagnetic waves emitted from the first irradiator. The second detector 50 may detect reflected waves of the electromagnetic waves emitted from the second irradiator.

Each element of the electromagnetic wave detection apparatus 1 controls the propagation direction of the electromagnetic waves, whereby the electromagnetic waves can propagate along the propagation axis 30 illustrated in FIG. 9 by way of example.

The electromagnetic waves propagate in the first direction represented by D1 and are then incident on the third surface 23. In a case in which the electromagnetic wave detection apparatus 1 includes the first image forming unit 31, the electromagnetic waves propagate in the first direction represented by D1 after passing through the first image forming unit 31 and are then incident on the third surface 23. A part of the electromagnetic waves incident on the third surface 23 enters the second propagation unit 20. Another part of the electromagnetic waves incident on the third surface 23 is reflected by the third surface 23, propagates in the direction represented by Da, and is then incident on the second detection surface 51 of the second detector 50. That is, the third surface 23 separates the incident electromagnetic waves into electromagnetic waves to propagate in the second direction and electromagnetic waves to be incident on the second detection surface 51.

The third surface 23 causes a part of the incident electromagnetic waves to propagate in the second direction represented by D2. That is, a part of the electromagnetic waves that is propagating in the first direction and incident on the third surface 23 propagates in the second direction within the second propagation unit 20. The electromagnetic waves having entered the second propagation unit 20 may be refracted at the third surface 23 and change its propagation direction. That is, the first direction and the second direction may be different directions. When the electromagnetic waves are perpendicularly incident on the third surface 23, the electromagnetic waves can propagate straight without being refracted at the third surface 23. That is, the first direction and the second direction may be the same direction.

The electromagnetic waves having entered the second propagation unit 20 propagate in the second direction, exits from the first surface 21, and then propagate to the reference surface 11 of the first propagation unit 10. That is, the first surface 21 emits the electromagnetic waves propagating in the second direction to the reference surface 11.

The electromagnetic waves are reflected by the pixel 12 of the first propagation unit 10 and re-enter the first surface 21. After re-entering the first surface 21, the electromagnetic waves propagate in the third direction represented by D3. In a case in which the pixels 12 have transitioned to the first state, the electromagnetic waves reflected by the pixel 12 propagate in the third direction. On the other hand, in a case in which the pixels 12 have transitioned to the second state, the electromagnetic waves propagate in the direction represented by Dz and exit from the third surface 23, and do not reach the first detector 40.

The electromagnetic waves propagate in the third direction within the second propagation unit 20 and reaches the third surface 23. The electromagnetic waves are reflected by the third surface 23 and propagate in the fourth direction represented by D4. That is, the third surface 23 reflects the electromagnetic waves propagating in the third direction within the second propagation unit 20 and causes the electromagnetic waves to propagate in the fourth direction. The electromagnetic waves may undergo total reflection by the third surface 23. That is, the third surface 23 may cause total reflection of the electromagnetic waves propagating in the third direction within the second propagation unit 20.

The electromagnetic waves propagate in the fourth direction within the second propagation unit 20, exit from the second surface 22, and propagate to the first detection surface 41 of the first detector 40. That is, the second surface 22 emits the electromagnetic waves propagating in the fourth direction to the first detection surface 41. In a case in which the electromagnetic wave detection apparatus 1 includes the second image forming unit 32, the electromagnetic waves exit from the second surface 22, pass through the second image forming unit 32, and are then incident on the first detection surface 41. The first detector 40 detects the electromagnetic waves incident on the first detection surface 41.

As described above, the electromagnetic wave detection apparatus 1 transitions the pixels 12 of the first propagation unit 10 to one of the first state and the second state and thus can control whether to cause the electromagnetic waves incident on the second propagation unit 20 from the third surface 23 to be incident on the first detection surface 41.

On the other hand, the third surface 23 reflects a part of the incident electromagnetic waves, causes the electromagnetic waves to propagate in the direction represented by Da and to be incident on the second detection surface 51 of the second detector 50. That is, the part of the electromagnetic waves propagating in the first direction and incident on the third surface 23 is then incident on the second detection surface 51. The second detector 50 detects the electromagnetic waves incident on the second detection surface 51.

In a case in which the electromagnetic wave detection apparatus 1 includes the first image forming unit 31, the first image forming unit 31 forms an image of an incident electromagnetic waves. The first image forming unit 31 forms an image of the electromagnetic waves entering the second propagation unit 20 from the third surface 23 on the reference surface 11 of the first propagation unit 10. The first image forming unit 31 forms, on the second detection surface 51, an image of the electromagnetic waves that has been reflected by the third surface 23, propagated in the direction represented by Da, and then incident on the second detection surface 51 of the second detector 50. In other words, the second detector 50 is arranged at a position such that the electromagnetic waves pass through the first image forming unit 31, are reflected by the third surface 23, and propagate in the direction represented by Da, and then form an image on the second detection surface 51.

The image formed on the second detection surface 51 of the second detector 50 may be the same as or similar to the image formed on the reference surface 11 of the first propagation unit 10. In a case in which the second detector 50 includes detection elements arranged in an array, the second detector 50 may detect an image that is the same as or similar to the image formed on the reference surface 11 of the first propagation unit 10.

The third surface 23 may reflect the electromagnetic waves at a predetermined reflectance. If the predetermined reflectance is fixed regardless of the wavelength of the electromagnetic waves, the image detected on the second detection surface 51 of the second detector 50 can be an image simply containing different intensity of the electromagnetic waves by a predetermined ratio with respect to the image formed on the reference surface 11 of the first propagation unit 10.

The third surface 23 may reflect the electromagnetic waves at a reflectance determined based on the wavelength of the electromagnetic waves and cause the electromagnetic waves to propagate in the direction represented by Da and to be incident on the second detection surface 51 of the second detector 50. In other words, the third surface 23 may transmit the electromagnetic waves with the transmittance determined based on the wavelengths of the electromagnetic waves and cause the electromagnetic waves to enter the second propagation unit 20.

For example, the third surface 23 may reflect electromagnetic waves containing wavelengths within a predetermined range at a reflectance of a predetermined value or more and reflect electromagnetic waves containing wavelengths out of the predetermined range at a reflectance of smaller than the predetermined value. This facilitates incident of electromagnetic waves containing wavelengths within the predetermined range on the second detection surface 51 of the second detector 50. On the other hand, this enables electromagnetic waves containing wavelengths out of the predetermined range to easily enter the second propagation unit 20. As a result, electromagnetic waves can be separated based on their wavelengths. That is, the third surface 23 can separate electromagnetic waves, based on wavelengths of the electromagnetic waves.

The predetermined range may be a value equal to or larger than a predetermined wavelength or a range specified as a value larger than the predetermined wavelength. The predetermined range may be a value equal to or smaller than the predetermined wavelength or a value specified as a value smaller than the predetermined wavelength. The predetermined range may be a range specified as a value equal to or larger than a first predetermined wavelength and equal to or smaller than a second predetermined wavelength. The predetermined range may be a range specified as a value equal to or smaller than the first predetermined wavelength or equal to or larger than the second predetermined wavelength.

The third surface 23 separates the electromagnetic waves based on the wavelength, whereby images that are formed by electromagnetic waves containing different wavelengths and the same coordinates within the images may be formed on the second detection surface 51 of the second detector 50 and the reference surface 11 of the first propagation unit 10. In a case in which the coordinates of the images formed on the second detection surface 51 and the reference surface 11 coincide with each other, the image information detected by the first detector 40 or the image-like distance information or the image-like temperature information can be easily superimposed on the image information detected by the first detector 40. Further, because the third surface 23 separates the electromagnetic waves based on the wavelength, each of the first detector 40 and the second detector 50 can serve as a sensor to detect electromagnetic waves containing specific wavelengths. That is, the first detector 40 and the second detector 50 may include respective sensors of different types. The first detector 40 and the second detector 50 may include respective sensors of the same type.

A difference between a length of the propagation path of the electromagnetic waves from the third surface 23 to the second detection surface 51 and a length of the propagation path of the electromagnetic waves from the third surface 23 to the reference surface 11 may be a predetermined value or smaller. In a case in which the electromagnetic wave detection apparatus 1 includes the first image forming unit 31, when a difference between the length of the propagation paths of the electromagnetic waves is equal to or smaller than the predetermined value, an image can be easily formed on each of the reference surface 11 and the second detection surface 51 by the first image forming unit 31. Also, when the difference between the length of the propagation paths of the electromagnetic waves is equal to or smaller than the predetermined value, a difference in focusing of an image formed on the reference surface 11 and that of an image formed on the second detection surface 51 can be reduced. The length of the propagation path of the electromagnetic waves from the third surface 23 to the second detection surface 51 and the length of the propagation path of the electromagnetic waves from the third surface 23 to the reference surface 11 may be the same. The length of the propagation path of the electromagnetic waves may correspond to a distance over which the electromagnetic waves actually propagate or a length of an optical path calculated by multiplying the distance over which the electromagnetic waves propagate by a refractive index of a material through which the electromagnetic waves propagate.

The electromagnetic wave detection apparatus 1 may further include a controller 60, as illustrated in FIG. 10. The controller 60 may be configured to be the same as or similar to the controller 60 described in the first embodiment. The controller 60 can control the propagation direction of the electromagnetic waves by controlling the first propagation unit 10. The controller 60 may acquire a detection result of the electromagnetic waves from the first detector 40. The controller 60 may acquire image information regarding an image formed from the electromagnetic waves from the first detector 40. The controller 60 may acquire the image information regarding the image formed from the electromagnetic waves by synchronizing the control of each of the pixels 12 of the first propagation unit 10 and the detection result acquired from the first detector 40. The controller 60 may control the irradiator 62 or the scanner 64 to control radiation or scanning of the electromagnetic waves. The controller 60 may acquire the image information regarding the image formed from the electromagnetic waves, based on the control associated with the radiation or scanning of the electromagnetic waves and the detection result acquired from the first detector 40. In a case in which the irradiator 62 includes the first irradiator and the second irradiator, the controller 60 may cause each of the first irradiator and the second irradiator to radiate electromagnetic waves.

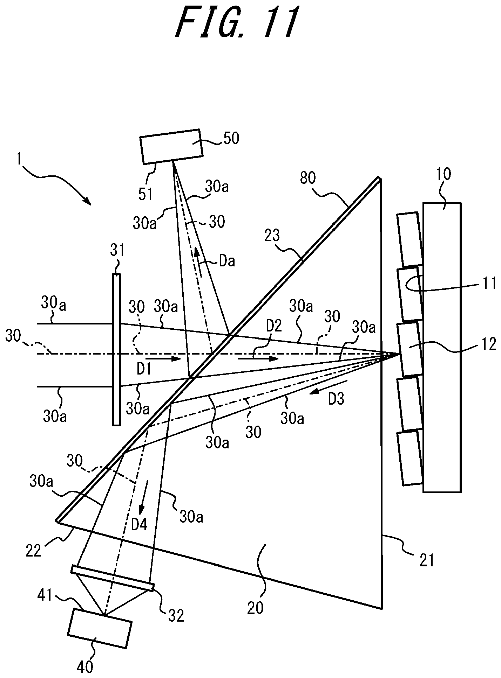

In the electromagnetic wave detection apparatus 1 according to the embodiment, as illustrated in FIG. 11, the second propagation unit 20 may further include a separator 80 arranged along the third surface 23, in addition to the configuration illustrated in FIG. 9. The separator 80 may be arranged on the third surface 23. In a case in which the separator 80 is arranged on the third surface 23, the third surface 23 forms a boundary surface between the prism forming the second propagation unit 20 and the separator 80.

The separator 80 may include at least one of a visible light reflection coating, a half mirror, a beam splitter, a dichroic mirror, a cold mirror, a hot mirror, a meta surface, and a deflecting element.

In a case in which the separator 80 is arranged on the third surface 23, the refractive index of the prism forming the second propagation unit 20 is larger than the refractive index of the separator 80. Thus, the critical angle may exist when electromagnetic waves propagating within the second propagation unit 20 are incident on the third surface 23. That is, the electromagnetic waves propagating within the second propagation unit 20 can undergo total reflection by the third surface 23.

The separator 80 may reflect the electromagnetic waves at a predetermined reflectance. If the predetermined reflectance is fixed regardless of the wavelength of the electromagnetic waves, the image detected on the second detection surface 51 of the second detector 50 can simply contain a different intensity of the electromagnetic waves by a predetermined ratio with respect to the image formed on the reference surface 11 of the first propagation unit 10.

The separator 80 may reflect the electromagnetic waves at a reflectance determined based on the wavelength of the electromagnetic waves, and cause the electromagnetic waves to propagate in the direction represented by Da and to be incident on the second detection surface 51 of the second detector 50. In other words, the separator 80 may transmit the electromagnetic waves with the transmittance determined based on the wavelength of the electromagnetic waves and cause the electromagnetic waves to pass through the third surface 23 and to enter the second propagation unit 20.

For example, the separator 80 may reflect electromagnetic waves containing wavelengths within a predetermined range with a reflectance of a predetermined value or larger, and may reflect electromagnetic waves containing wavelengths out of the predetermined range with a reflectance of smaller than the predetermined value. This facilitates incident of the electromagnetic waves containing wavelengths within the predetermined range on the second detection surface 51 of the second detector 50. On the other hand, this enables the electromagnetic waves containing wavelengths out of the predetermined range to enter the second propagation unit 20. As a result, the electromagnetic waves can be separated based on their wavelengths. That is, the separator 80 can separate electromagnetic waves based on their wavelengths.

The predetermined range may be a value equal to or larger than a predetermined wavelength or a value within a range specified as a value that is larger than the predetermined wavelength. The predetermined range may be a range specified as a value equal to or smaller than the predetermined wavelength or a value smaller than the predetermined wavelength. The predetermined range may be a range specified as a value equal to or larger than a first predetermined wavelength and equal to or smaller than a second predetermined wavelength. The predetermined range may be a range specified as a value equal to or smaller than the first predetermined wavelength or equal to or larger than the second predetermined wavelength.

The separator 80 separates electromagnetic waves based on the wavelengths, whereby images formed from electromagnetic waves containing different wavelengths and the same coordinates within the images can be respectively formed on the second detection surface 51 of the second detector 50 and on the reference surface 11 of the first propagation unit 10. When the coordinates of the images formed on the second detection surface 51 and the reference surface 11 coincide with each other, the image information detected by the first detector 40 or the image-like distance information or the image-like temperature information can be easily superimposed on the image information detected by the second detector 50. Further, because the separator 80 separates electromagnetic waves based on the wavelengths, each of the first detector 40 and the second detector 50 can be configured as a sensor to detect electromagnetic waves containing particular wavelengths.

The electromagnetic waves can propagate along the propagation axis 30 illustrated in FIG. 11 by way of example. The electromagnetic waves having propagated in the first direction are then incident on the separator 80. In a case in which the electromagnetic wave detection apparatus 1 includes the first image forming unit 31, the electromagnetic waves are incident on the separator 80 after passing through the first image forming unit 31.

A part of the electromagnetic waves incident on the separator 80 passes through the third surface 23 and enters the second propagation unit 20. Another part of the electromagnetic waves incident on the third surface 23 is reflected by the separator 80, propagates in the direction represented by Da, and is then incident on the second detection surface 51 of the second detector 50. That is, the separator 80 separates the incident electromagnetic waves into the electromagnetic waves propagating in the second direction and the electromagnetic waves to be incident on the second detection surface 51.

The electromagnetic waves incident on the second propagation unit 20 after passing through the separator 80 and the third surface 23 propagate in the second direction. The electromagnetic waves having entered the second propagation unit 20 may be refracted at the third surface 23 and change its propagation direction. That is, the first direction and the second direction may be different directions. When the electromagnetic waves are perpendicularly incident on the third surface 23, the electromagnetic waves can propagate straight without being refracted at the third surface 23. That is, the first direction and the second direction may be the same direction.

The electromagnetic waves propagating in the second direction within the prism that constitutes the second propagation unit 20 can propagate along the propagation axis 30, and thus are emitted to and re-enter the first surface 21, exit from the second surface 22, and then incident on the first detection surface 41.

In a case in which the third surface 23 of the second propagation unit 20 serves as the boundary surface between the third surface 23 and the separator 80, the critical angle of the electromagnetic waves incident on the third surface 23 depends on the refractive indices of the prism constituting the second propagation unit 20 and the separator 80. It is assumed that when $\alpha$ represents the refractive index of the prism constituting the second propagation unit 20 and $\varepsilon$ represents the refractive index of the separator 80, $\varepsilon < \alpha$ is satisfied. When CA5 represents the critical angle of the electromagnetic waves incident on the boundary surface between the prism constituting the second propagation unit 20 and the separator 80, the following formula (5) is satisfied.

$$\sin(CA5) = \varepsilon/\alpha \ (5)$$

As illustrated in FIG. 11 by way of example, because the second propagation unit 20 includes the separator 80, electromagnetic waves incident on the electromagnetic wave detection apparatus 1 can be easily separated in accordance with their wavelengths.

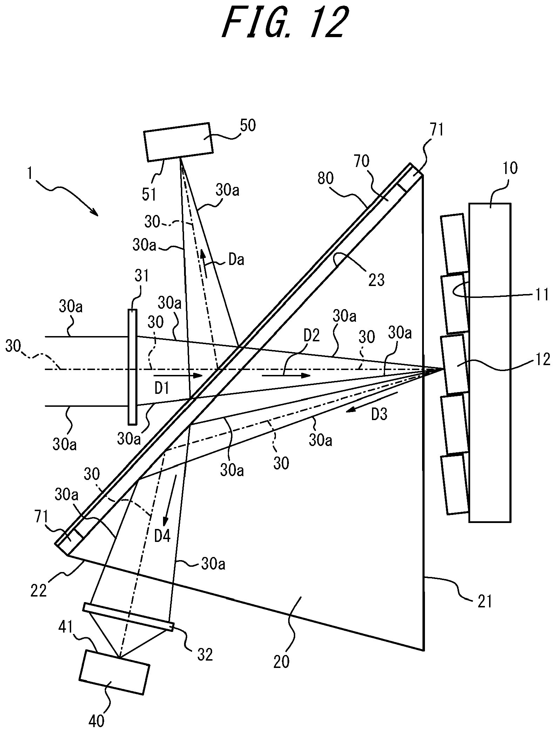

In the electromagnetic wave detection apparatus 1 according to the embodiment, as illustrated in FIG. 12, the second propagation unit 20 may further include an intermediate layer 70 between the third surfaced 23 and the separator 80, in addition to the configuration illustrated in FIG. 11 by way of example. The third surface 23 forms a boundary surface between the prism constituting the second propagation unit 20 and the intermediate layer 70. The intermediate layer 70 may include at least one of vacuum, a gas, a liquid, a solid, and an amorphous. The intermediate layer 70 may include an air layer or a prism. A refractive index of the prism constituting the second propagation unit 20 is larger than the refractive index of the intermediate layer 70. Thus, the critical angle may exist when the electromagnetic waves propagating within the second propagation unit 20 are incident on the third surface 23. That is, the electromagnetic waves propagating within the second propagation unit 20 can undergo total reflection by the third surface 23. The refractive index of the separator 80 may be the same as or different from the refractive index of the prism constituting the second propagation unit 20. The refractive index of the separator 80 may be the same as or different from the refractive index of the intermediate layer 70. The spacer 71 is arranged to maintain a fixed distance between the first prism 20a and the second prism 20b. That is, the spacer 71 is arranged to maintain a fixed thickness of the intermediate layer 70. In a case in which the intermediate layer 70 contains no fluidity or small fluidity, the spacer 71 may be omitted.

The electromagnetic waves can propagate along the propagation axis 30 illustrated in FIG. 12 by way of example. The electromagnetic waves propagating in the first direction are incident on the separator 80. In a case in which the electromagnetic wave detection apparatus 1 includes the first image forming unit 31, the electromagnetic waves are incident on the separator 80 after passing through the first image forming unit 31.

A part of the electromagnetic waves incident on the separator 80 enters the intermediate layer 70. Another part of the electromagnetic waves incident on the separator 80 is reflected by the separator 80, propagates in the direction represented by Da, and is then incident on the second detection surface 51 of the second detector 50. That is, the separator 80 separates the incident electromagnetic waves into the electromagnetic waves to enter the intermediate layer 70 and the electromagnetic waves to be incident on the second detection surface 51.

The electromagnetic waves incident on the intermediate layer 70 pass through the intermediate layer 70 and are then incident on the third surface 23. The third surface 23 causes the electromagnetic waves to propagate in the second direction represented by D2. That is, the electromagnetic waves propagate in the second direction after passing through the intermediate layer 70. The electromagnetic waves can be refracted at the boundary surface between the separator 80 and the intermediate layer 70 and at the third surface 23 and change its propagation direction. The electromagnetic waves may propagate in the same direction as a result, after being refracted at the boundary surface between the separator 80 and the intermediate layer 70 and at the third surface 23. When the electromagnetic waves are perpendicularly incident on the boundary surface, the electromagnetic waves can propagate straight without being refracted at the boundary surface. That is, the first direction and the second direction may be the same direction.

The electromagnetic waves propagating in the second direction within the prism constituting the second propagation unit 20 can propagate along the propagation axis 30, and thus are emitted to and re-enter the first surface 21, reflected by the third surface 23, exiting from the second surface 22, and then incident on the first detection surface 41.

Because the intermediate layer 70 is arranged between the third surface 23 and the separator 80, the flexibility of the refractive index of the separator 80 can be increased.

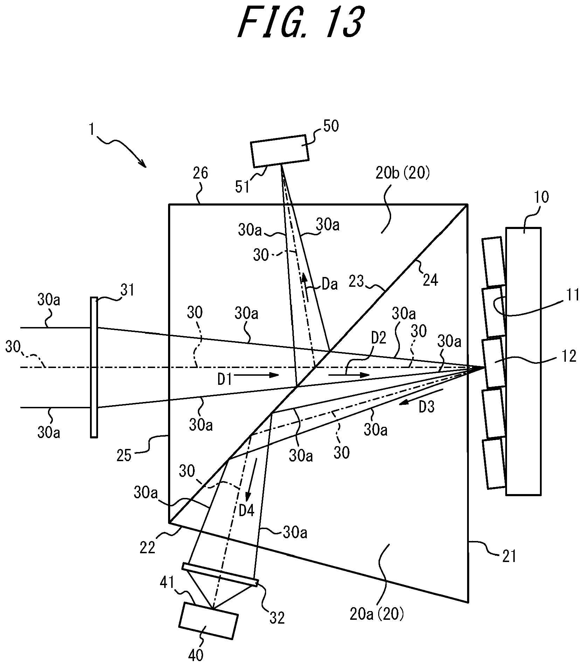

In the electromagnetic wave detection apparatus 1 according to the embodiment, the second propagation unit 20 may include a first prism 20a and a second prism 20b, as illustrated in FIG. 13. The refractive index of the second prism 20b is smaller than the refractive index of the first prism 20a. Thus, the critical angle may exist when electromagnetic waves propagating within the first prism 20a are incident on the third surface 23. That is, the electromagnetic waves propagating within the first prism 20a can undergo total reflection by the third surface 23. The first prism 20a contains a first surface 21, a second surface 22, and a third surface 23. The second prism 20b contains a fourth surface 24, a fifth surface 25, and a sixth surface 26. That is, each of the first prism 20a and the second prism 20b contains at least three surfaces. The fourth surface 24 of the second prism 20b forms a boundary surface between the first prism 20a and the second prism 20b together with the third surface 23 of the first prism 20a. The fifth surface 25 of the second prism 20b intersects the direction in which the electromagnetic waves are incident on the second propagation unit 20. The sixth surface 26 of the second prism 20b intersects the fourth surface 24 and the fifth surface 25. The second prism 20b may be a triangle containing the fourth surface 24, the fifth surface 25, and the sixth surface 26 as its sides in a plan view presenting the propagation axis 30 of the electromagnetic waves, as illustrated in FIG. 6 by way of example. The second prism 20b may contain a polygonal shape such as a quadrangle that also contains another surface as its side in a plan view presenting the propagation axis 30 of the electromagnetic waves.

The electromagnetic waves can propagate along the propagation axis 30 illustrated in FIG. 13 by way of example. The electromagnetic waves are incident on the fifth surface 25 of the second prism 20b. In a case in which the electromagnetic wave detection apparatus 1 includes the first image forming unit 31, the electromagnetic waves are incident on the fifth surface 25 after passing through the first image forming unit 31. The principal plane of the first image forming unit 31 may be parallel to the fifth surface 25. The direction in which the first image forming unit 31 causes the electromagnetic waves to be incident on the fifth surface 25 may be orthogonal to the fifth surface 25. The fifth surface 25 causes the incident electromagnetic waves to propagate in the first direction represented by D1. That is, the electromagnetic waves propagate in the first direction within the second prism 20b.

The electromagnetic waves propagating in the first direction exit from the fourth surface 24 and are then incident on the third surface 23 of the first prism 20a. A part of the electromagnetic waves incident on the third surface 23 is then incident on the first prism 20a. Another part of the electromagnetic waves incident on the third surface 23 is reflected by the third surface 23, exits from the sixth surface 26 of the second prism 20b, and is then incident on the second detection surface 51 of the second detector 50. That is, the separator 80 separates the incident electromagnetic waves into the electromagnetic waves to be incident on first prism 20a and the electromagnetic waves to be incident on the second detection surface 51.

The third surface 23 causes the electromagnetic waves to propagate in the second direction represented by D2. That is, the electromagnetic waves propagate in the second direction after passing through the boundary surface formed by the fourth surface 24 and the third surface 23. The electromagnetic waves may be refracted at the boundary surface between the first prism 20a and the second prism 20b and change its propagation direction. That is, the first direction and the second direction may be different directions. When the electromagnetic waves are perpendicularly incident on the boundary surface, the electromagnetic waves can propagate straight without being refracted at the boundary surface. That is, the first direction and the second direction may be the same direction.

The electromagnetic waves propagating in the second direction within the first prism 20a can propagate along the propagation axis 30, and thus are emitted to and re-enter the first surface 21, reflected by the third surface 23, emitted from the second surface 22, and are then incident on the first detection surface 41.

As illustrated in FIG. 13 by way of example, because the second propagation unit 20 includes the second prism 20b, the third surface 23 of the first prism 20a can be protected. If a foreign matter such as water, oil, or dust adheres to the exterior of the third surface 23, it may hinder total reflection of the electromagnetic waves incident on the third surface 23 from the inside and, simultaneously, affect electromagnetic waves to be reflected by the third surface 23 and incident on the second detector 50. Because the third surface 23 is protected, the condition for the total reflection on the third surface 23 can be maintained, and the electromagnetic waves to be incident on the second detector 50 is less likely to be affected.

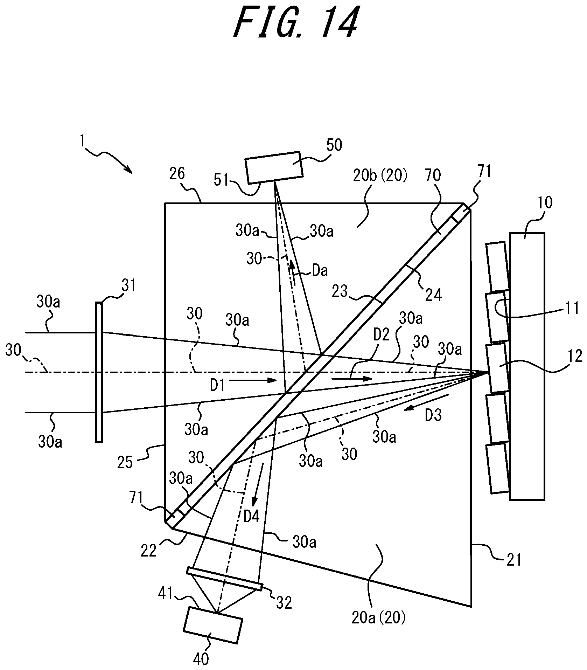

In the electromagnetic wave detection apparatus 1 according to the embodiment, as illustrated in FIG. 14, the second propagation unit 20 may further include the intermediate layer 70 between the first prism 20a and the second prism 20b, in addition to the configuration illustrated in FIG. 13 by way of example. The intermediate layer 70 may include at least one of vacuum, a gas, a liquid, a solid, and an amorphous. The intermediate layer 70 may include an air layer or a prism. The refractive index of the intermediate layer 70 is smaller than the refractive index of the first prism 20a. The refractive index of the second prism 20b may be the same as or different from the refractive index of the first prism 20a. The refractive index of the second prism 20b may be the same as or different from the refractive index of the intermediate layer 70. The spacer 71 is arranged to maintain a fixed distance between the first prism 20a and the second prism 20b. That is, the spacer 71 is arranged to maintain a fixed thickness of the intermediate layer 70. In a case in which the intermediate layer 70 contains no fluidity or small fluidity, the spacer 71 may be omitted.

The third surface 23 of the first prism 20a forms a boundary surface between the first prism 20a and the intermediate layer 70. The fourth surface 24 of the second prism 20b forms a boundary surface between the second prism 20b and the intermediate layer 70.

The electromagnetic waves can propagate along the propagation axis 30 illustrated in FIG. 14. The electromagnetic waves are incident on the fifth surface 25 of the second prism 20b. In a case in which the electromagnetic wave detection apparatus 1 includes the first image forming unit 31, the electromagnetic waves are incident on the fifth surface 25 after passing through the first image forming unit 31. The principal plane of the first image forming unit 31 may be parallel to the fifth surface 25. The direction in which the first image forming unit 31 causes the electromagnetic waves to be incident on the fifth surface 25 may be orthogonal to the fifth surface 25. The fifth surface 25 causes the incident electromagnetic waves to propagate in the first direction represented by D1. That is, the electromagnetic waves propagate in the first direction within the second prism 20b.

The electromagnetic waves propagating in the first direction are incident on the fourth surface 24. A part of the electromagnetic waves incident on the fourth surface 24 passes through the intermediate layer 70 and is then incident on the third surface 23. Another part of the electromagnetic waves incident on the fourth surface 24 is reflected by the fourth surface 24, propagates in the direction represented by Da, exits from the sixth surface 26 of the second prism 20b, and is then incident on the second detection surface 51 of the second detector 50. That is, the fourth surface 24 separates the incident electromagnetic waves into the electromagnetic waves to be incident on the third surface 23 and the electromagnetic waves to be incident on the second detection surface 51.

The third surface 23 causes the electromagnetic waves to propagate in the second direction represented by D2. That is, the electromagnetic waves propagate in the second direction within the first prism 20a. The electromagnetic waves may be refracted at the boundary surface between the second prism 20b and the intermediate layer 70 and the boundary surface between the intermediate layer 70 and the first prism 20a and change its propagation direction. The electromagnetic waves may propagate in the same direction as a result, after being refracted at the boundary surface between the second prism 20b and the intermediate layer 70 and the boundary surface between the intermediate layer 70 and the first prism 20a. When the electromagnetic waves are perpendicularly incident on the boundary surface, the electromagnetic waves can propagate straight without being refracted at the boundary surface. That is, the first direction and the second direction may be the same direction.

The electromagnetic waves propagating in the second direction within the first prism 20a can propagate along the propagation axis 30 and thus can be emitted to and re-enter the first surface 21, reflected by the third surface 23, exit from the second surface 22, and then incident on the first detection surface 41.

The configuration in which the intermediate layer 70 is arranged between the first prism 20a and the second prism 20b as illustrated in FIG. 14 by way of example is also referred to as the total internal reflection prism. The total internal reflection prism is also referred to as the TIR (TIR: Total Internal Reflection) prism. Because the second propagation unit 20 includes the TIR prism as illustrated in FIG. 14 by way of example, the condition for the total reflection on the third surface 23 can be easily maintained. The intermediate layer 70 is positioned between the first prism 20a and the second prism 20b, whereby the flexibility of the refractive index and the shape of the second prism 20b can be increased. Further, the electromagnetic waves reflected by the fourth surface 24 and incident on the second detector 50 are less likely to be affected.

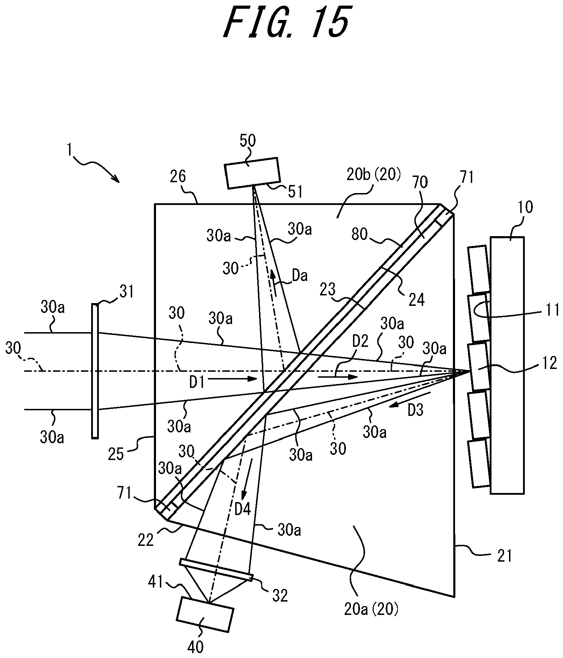

In the electromagnetic wave detection apparatus 1 according to the embodiment, as illustrated in FIG. 15, the second propagation unit 20 may further includes a separator 80 between the intermediate layer 70 and the second prism 20b, in addition to the configuration illustrated in FIG. 14 by way of example. The separator 80 may be arranged on the fourth surface 24. In a case in which the separator 80 is arranged on the fourth surface 24, the fourth surface 24 forms a boundary surface between the second prism 20b and the separator 80. The third surface 23 of the first prism 20a forms a boundary surface between the first prism 20a and the intermediate layer 70. The separator 80 may contain a configuration the same as or similar to the configuration described with respect to the separator 80 illustrated in FIG. 11 by way of example.

The electromagnetic waves can propagate along the propagation axis 30 illustrated in FIG. 15 by way of example. The electromagnetic waves are incident on the fifth surface 25 of the second prism 20b. In a case in which the electromagnetic wave detection apparatus 1 includes the first image forming unit 31, the electromagnetic waves are incident on the fifth surface 25 after passing through the first image forming unit 31. The principal plane of the first image forming unit 31 may be parallel to the fifth surface 25. The direction in which the first image forming unit 31 causes the electromagnetic waves to be incident on the fifth surface 25 may be orthogonal to the fifth surface 25. The fifth surface 25 causes the incident electromagnetic waves to propagate in the first direction represented by D1. That is, the electromagnetic waves propagate in the first direction within the second prism 20b.

The electromagnetic waves propagating in the first direction are incident on the fourth surface 24. That is, the electromagnetic waves are incident on the boundary surface between the second prism 20b and the separator 80. A part of the electromagnetic waves incident on the fourth surface 24 passes through the separator 80 and the intermediate layer 70 and is then incident on the third surface 23 of the first prism 20a. Another part of the electromagnetic waves incident on the fourth surface 24 is reflected by the boundary surface, propagates in the direction represented by Da, exits from the sixth surface 26 of the second prism 20b, and is then incident on the second detection surface 51 of the second detector 50. That is, the boundary surface between the fourth surface 24 and the separator 80 or the boundary surface between the second prism 20b and the separator 80 separates the incident electromagnetic waves into the electromagnetic waves to be incident on the third surface 23 and the electromagnetic waves to be incident on the second detection surface 51.

The third surface 23 causes the electromagnetic waves to propagate in the second direction represented by D2. That is, the electromagnetic waves propagate in the second direction within the first prism 20a. The electromagnetic waves may be refracted at the boundary surface between the separator 80 and the intermediate layer 70 and the boundary surface between the intermediate layer 70 and the first prism 20a and change its propagation direction. The electromagnetic waves may propagate in the same direction as a result, after being refracted at the boundary surface between the separator 80 and the intermediate layer 70 and the boundary surface between the intermediate layer 70 and the first prism 20a. When the electromagnetic waves are perpendicularly incident on the boundary surface, the electromagnetic waves can propagate straight without being refracted at the boundary surface. That is, the first direction and the second direction may be the same direction.

The electromagnetic waves propagating in the second direction within the first prism 20a can propagate along the propagation axis 30 and thus are emitted to and re-enter the first surface 21, reflected by the third surface 23, exiting from the second surface 22, and then incident on the first detection surface 41.

When the electromagnetic wave detection apparatus 1 includes the separator 80 on the fourth surface 24 of the second prism 20b as illustrated in FIG. 15 by way of example, the electromagnetic wave detection apparatus 1 can easily control the electromagnetic waves to be incident on the second detector 50.

Although the disclosure has been described based on the figures and the embodiments, it is to be understood that various changes and modifications may be implemented based on the disclosure herein by those who are ordinarily skilled in the art. Accordingly, such changes and modifications are included in the scope of the disclosure herein. For example, functions and the like included in each functional unit may be rearranged without logical inconsistency, so as to combine a plurality of functions together or to subdivide them. Also, each of the above embodiments does not need to be practiced strictly following the description thereof but may be implemented by appropriately combining or partially omitting features.

The descriptions such as "first" and "second" used herein are identifiers for distinguishing the configuration. In the configuration distinguished by the descriptions of "first" and "second", such numbers can be interchanged. For example, the first prism and the second prism can interchange their identifiers: "first" and "second". The interchange is performed simultaneously. The configuration remains being distinguished after the interchange. The identifiers may be removed. The configurations from which the identifiers are removed may be distinguished by reference signs. The descriptions of the identifiers "first" and "second" alone should not be used as a ground that defines the order of the elements or as a ground that proves the presence of a smaller numbered identifier.

**Claims**

1. An electromagnetic wave detection apparatus (1) comprising:

   a first propagation unit (10) that includes a reference surface (11) and a plurality of pixels (12) positioned along the reference surface (11) and causes electromagnetic waves incident on the reference surface (11) to propagate in a particular direction using each of the pixels (12);
   a first detector (40) that includes a first detection surface (41) and detects electromagnetic waves incident on the first detection surface (41); and
   a second propagation unit (20) that includes a first surface (21) opposing the reference surface (11), a second surface (22) opposing the first detection surface (41), and a third surface (23) intersecting the first surface (21) and the second surface (22) and on which reflected waves reflected by a detection object (66) of electromagnetic waves radiated from an irradiator (62) are incident,
   wherein
   the first surface (21) causes electromagnetic waves propagating in a second direction (D2) to be incident on the reference surface (11),
   the first surface (21) causes electromagnetic waves re-incident from the reference surface (11) to propagate in a third direction (D3) intersecting the third surface (23),
   the third surface (23) causes electromagnetic waves propagating in the third direction (D3) to propagate in a fourth direction (D4) intersecting the second surface (22),
   the second surface (22) emits electromagnetic waves propagating in the fourth direction (D4) to the first detection surface (41)
   **characterized in** comprising
   a second detector (50) that includes a second detection surface (51) and detects electromagnetic waves incident on the second detection surface (51);
   wherein the third surface (23) separates electromagnetic waves propagating in a first direction (D1) intersecting the third surface (23) into electromagnetic waves to be reflected by the third surface (23) and incident on the second detector (50) and electromagnetic waves to propagate in the second direction (D2) intersecting the first surface (21).

2. The electromagnetic wave detection apparatus (1) according to claim 1,
further comprising a first image forming unit (31) configured to form an image of electromagnetic waves propagating to the second propagation unit (20) and to cause the electromagnetic waves to be incident on the second propagation unit (20).

3. The electromagnetic wave detection apparatus (1) according to claim 2,
wherein the first image forming unit (31) is configured to form the image of the electromagnetic waves on the reference surface (11).

4. The electromagnetic wave detection apparatus (1) according to claim 2,
wherein the first image forming unit (31) is configured to form the image of the electromagnetic waves on the second detection surface (51) via the third surface (23).

5. The electromagnetic wave detection apparatus (1) according to any one of claims 1 to 4,
further comprising a second image forming unit (32) configured to form an image of electromagnetic waves emitted from the second surface (22) and cause the electromagnetic waves to propagate to the first detector (40).

6. The electromagnetic wave detection apparatus (1) according to claim 5,
wherein the second image forming unit (32) is configured to form an image of electromagnetic waves on the first detection surface (41).

7. The electromagnetic wave detection apparatus (1) according to claim 6,
wherein the length of the propagation path in which electromagnetic waves propagate from the third surface (23) to the second detection surface (51) and the length of the propagation path in which electromagnetic waves propagate from the third surface (23) to the reference surface (11) are equal to each other.

8. The electromagnetic wave detection apparatus (1) according to any one of claims 1 to 7,
wherein the third surface (23) causes, among electromagnetic waves propagating in the first direction (D1), electromagnetic waves containing a particular wavelength to propagate to the second detection surface (51) and electromagnetic waves containing other wavelengths to propagate in the second direction (D2).

9. The electromagnetic wave detection apparatus (1) according to any one of claims 1 to 8,
wherein an incident angle of electromagnetic waves propagating in the first direction (D1) with respect to the third surface (23) is smaller than a critical angle.

10. The electromagnetic wave detection apparatus (1) according to any one of claims 1 to 9,
wherein the first surface (21) causes electromagnetic waves re-incident from the reference surface (11) to propagate in the third direction (D3) by transmitting or refracting the electromagnetic waves.

11. The electromagnetic wave detection apparatus (1) according to any one of claims 1 to 10,

wherein the second propagation unit (20) includes a first prism (21a) containing at least three surfaces, and
each of the first surface (21), the second surface (22), and the third surface (23) is included in the surfaces of the first prism (21a).

12. The electromagnetic wave detection apparatus (1) according to claim 11,
wherein the second propagation unit (20) further includes a separator (80) positioned along the third surface (23).

13. The electromagnetic wave detection apparatus (1) according to any one of claims 1 to 12,
wherein each of the pixels (12) of the first propagation unit (10) transitions to one of a first state to cause electromagnetic waves incident on the reference surface (11) to propagate in a predetermined direction and a second state to cause electromagnetic waves to propagate in a direction different from the predetermined direction.

14. The electromagnetic wave detection apparatus (1) according to claim 13,
wherein the first state is associated with a transmission state to transmit electromagnetic waves and the second state is associated with a reflection state to reflect electromagnetic waves.

15. The electromagnetic wave detection apparatus (1) according to any one of claims 1 to 14,
further comprising the irradiator (62) configured to radiate electromagnetic waves to a detection object (66) of a detector.

16. The electromagnetic wave detection apparatus (1) according to claim 15,

wherein the first detector (40) is configured to detect reflected waves of electromagnetic waves radiated from a first irradiator, and
the second detector (50) is configured to detected reflected waves of electromagnetic waves radiated from a second irradiator.

**Patentansprüche**

1. Elektromagnetische-Welle-Detektionsvorrichtung (1), aufweisend:

   eine erste Ausbreitungseinheit (10), die eine Referenzfläche (11) und eine Mehrzahl von Pixeln (12) aufweist, die entlang der Referenzfläche (11) angeordnet sind, und die bewirkt, dass auf die Referenzfläche (11) einfallende elektromagnetische Wellen sich in einer bestimmten Richtung ausbreiten, unter Verwendung von jedem der Pixel (12),
   einen ersten Detektor (40), der eine erste Detektionsfläche (41) aufweist und elektromagnetische Wellen detektiert, die auf die erste Detektionsfläche (41) einfallen, und
   eine zweite Ausbreitungseinheit (20), die aufweist: eine erste Fläche (21), die der Referenzfläche (11) gegenüberliegt, eine zweite Fläche (22), die der ersten Detektionsfläche (41) gegenüberliegt, und eine dritte Fläche (23), die die erste Fläche (21) und die zweite Fläche (22) schneidet und auf die reflektierten Wellen, die durch ein Detektionsobjekt (66) von elektromagnetischen Wellen reflektiert werden, die von einem Strahler (62) aus ausgestrahlt werden, einfallen,
   wobei die erste Fläche (21) bewirkt, dass sich in einer zweiten Richtung (D2) ausbreitende elektromagnetische Wellen auf die Referenzfläche (11) einfallen,
   die erste Fläche (21) bewirkt, dass von der Referenzfläche (11) aus erneut einfallende elektromagnetische Wellen sich in einer dritten Richtung (D3) ausbreiten, die die dritte Fläche (23) schneidet,
   die dritte Fläche (23) bewirkt, dass sich elektromagnetische Wellen, die sich in der dritten Richtung (D3) ausbreiten, in einer vierten Richtung (D4) ausbreiten, die die zweite Fläche (22) schneidet,
   die zweite Fläche (22) elektromagnetische Wellen, die sich in der vierten Richtung (D4) ausbreiten, zu der ersten Detektionsfläche (41) emittiert,
   **dadurch gekennzeichnet, dass** sie aufweist:

   einen zweiten Detektor (50), der eine zweite Detektionsfläche (51) aufweist und elektromagnetische Wellen detektiert, die auf die zweite Detektionsfläche (51) einfallen,
   wobei die dritte Fläche (23) elektromagnetische Wellen, die sich in einer ersten Richtung (D1) ausbreiten, die die dritte Fläche (23) schneidet, in elektromagnetische Wellen, die durch die dritte Fläche (23) zu reflektieren sind und auf den zweiten Detektor (50) einfallen, und elektromagnetische Wellen, die sich in der zweiten Richtung (D2) ausbreiten sollen, die die erste Fläche (21) schneidet, trennt.

2. Elektromagnetische-Welle-Detektionsvorrichtung (1) gemäß Anspruch 1,
   ferner aufweisend eine erste Bilderzeugungseinheit (31), die konfiguriert ist, um ein Bild von elektromagnetischen Wellen zu erzeugen, die sich zu der zweiten Ausbreitungseinheit (20) ausbreiten, und um zu bewirken, dass die elektromagnetischen Wellen auf die zweite Ausbreitungseinheit (20) einfallen.

3. Elektromagnetische-Welle-Detektionsvorrichtung (1) gemäß Anspruch 2,
   wobei die erste Bilderzeugungseinheit (31) konfiguriert ist, um das Bild der elektromagnetischen Wellen auf der Referenzfläche (11) zu erzeugen.

4. Elektromagnetische-Welle-Detektionsvorrichtung (1) gemäß Anspruch 2,
   wobei die erste Bilderzeugungseinheit (31) konfiguriert ist, um das Bild der elektromagnetischen Wellen auf der zweiten Detektionsfläche (51) über die dritte Fläche (23) zu erzeugen.

5. Elektromagnetische-Welle-Detektionsvorrichtung (1) gemäß irgendeinem der Ansprüche 1 bis 4,
   ferner aufweisend eine zweite Bilderzeugungseinheit (32), die konfiguriert ist, um ein Bild von elektromagnetischen Wellen zu erzeugen, die von der zweiten Fläche (22) emittiert werden, und um zu bewirken, dass sich die elektromagnetischen Wellen zu dem ersten Detektor (40) ausbreiten.

6. Elektromagnetische-Welle-Detektionsvorrichtung (1) gemäß Anspruch 5,
   wobei die zweite Bilderzeugungseinheit (32) konfiguriert ist, um ein Bild von elektromagnetischen Wellen auf der ersten Detektionsfläche (41) zu erzeugen.

7. Elektromagnetische-Welle-Detektionsvorrichtung (1) gemäß Anspruch 6,
   wobei die Länge des Ausbreitungspfades, auf dem sich elektromagnetische Wellen von der dritten Fläche (23) zu der zweiten Detektionsfläche (51) ausbreiten, und die Länge des Ausbreitungspfades, auf dem sich elektromagnetische Wellen von der dritten Fläche (23) zu der Referenzfläche (11) ausbreiten, einander gleich sind.

8. Elektromagnetische-Welle-Detektionsvorrichtung (1) gemäß irgendeinem der Ansprüche 1 bis 7,
   wobei die dritte Fläche (23) bewirkt, dass sich unter sich in der ersten Richtung (D1) ausbreitenden elektromagnetischen Wellen elektromagnetische Wellen, die eine bestimmte Wellenlänge haben, zu der zweiten Detektionsfläche (51) ausbreiten und elektromagnetische Wellen, die andere Wellenlängen haben, sich in der zweiten Richtung (D2) ausbreiten.

9. Elektromagnetische-Welle-Detektionsvorrichtung (1) gemäß irgendeinem der Ansprüche 1 bis 8, wobei ein Einfallswinkel von sich in der ersten Richtung (D1) ausbreitenden elektromagnetischen Wellen in Bezug auf die dritte Fläche (23) kleiner als ein kritischer Winkel ist.

10. Elektromagnetische-Welle-Detektionsvorrichtung (1) gemäß irgendeinem der Ansprüche 1 bis 9, wobei die erste Fläche (21) bewirkt, dass von der Referenzfläche (11) aus erneut einfallende elektromagnetische Wellen sich in der dritten Richtung (D3) ausbreiten, durch Übertragen oder Brechen der elektromagnetischen Wellen.

11. Elektromagnetische-Welle-Detektionsvorrichtung (1) gemäß irgendeinem der Ansprüche 1 bis 10,

wobei die zweite Ausbreitungseinheit (20) ein erstes Prisma (21a) aufweist, das mindestens drei Flächen enthält, und jede von der ersten Fläche (21), der zweiten Fläche (22) und der dritten Fläche (23) in den Flächen des ersten Prismas (21a) enthalten ist.

12. Elektromagnetische-Welle-Detektionsvorrichtung (1) gemäß Anspruch 11, wobei die zweite Ausbreitungseinheit (20) ferner einen Separator (80) aufweist, der entlang der dritten Fläche (23) angeordnet ist.

13. Elektromagnetische-Welle-Detektionsvorrichtung (1) gemäß irgendeinem der Ansprüche 1 bis 12, wobei jedes der Pixel (12) der ersten Ausbreitungseinheit (10) in einen von einem ersten Zustand, um zu bewirken, dass auf die Referenzfläche (11) einfallende elektromagnetische Wellen sich in einer vorbestimmten Richtung ausbreiten, und einem zweiten Zustand übergeht, um zu bewirken, dass sich elektromagnetische Wellen in einer von der vorbestimmten Richtung verschiedenen Richtung ausbreiten.

14. Elektromagnetische-Welle-Detektionsvorrichtung (1) gemäß Anspruch 13, wobei der erste Zustand mit einem Übertragungszustand zum Übertragen von elektromagnetischen Wellen assoziiert ist und der zweite Zustand mit einem Reflexionszustand zum Reflektieren von elektromagnetischen Wellen assoziiert ist.

15. Elektromagnetische-Welle-Detektionsvorrichtung (1) gemäß irgendeinem der Ansprüche 1 bis 14, ferner aufweisend den Strahler (62), der konfiguriert ist, um elektromagnetische Wellen auf ein Detektionsobjekt (66) eines Detektors zu strahlen.

16. Elektromagnetische-Welle-Detektionsvorrichtung (1) gemäß Anspruch 15,

wobei der erste Detektor (40) konfiguriert ist, um reflektierte Wellen von elektromagnetischen Wellen, die von einem ersten Strahler aus ausgestrahlt werden, zu detektieren, und der zweite Detektor (50) konfiguriert ist, um reflektierte Wellen von elektromagnetischen Wellen, die von einem zweiten Strahler aus ausgestrahlt werden, zu detektieren.

**Revendications**

1. Appareil de détection d'ondes électromagnétiques (1), comprenant :

une première unité de propagation (10) qui comprend une surface de référence (11) et une pluralité de pixels (12) positionnés le long de la surface de référence (11) et fait en sorte que des ondes électromagnétiques incidentes sur la surface de référence (11) se propagent dans une direction particulière en utilisant chacun des pixels (12) ;
un premier détecteur (40) qui comprend une première surface de détection (41) et détecte des ondes électromagnétiques incidentes sur la première surface de détection (41) ; et
une deuxième unité de propagation (20) qui comprend une première surface (21) opposée à la surface de référence (11), une deuxième surface (22) opposée à la première surface de détection (41), et une troisième surface (23) coupant la première surface (21) et la deuxième surface (22) et sur laquelle sont incidentes des ondes réfléchies qui sont réfléchies par un objet de détection (66) d'ondes électromagnétiques rayonnées depuis un irradiateur (62), la première surface (21) fait en sorte que des ondes électromagnétiques se propageant dans une deuxième direction (D2) soient incidentes sur la surface de référence (11), la première surface (21) fait en sorte que des ondes électromagnétiques ré-incidentes depuis la surface de référence (11) se propagent dans une troisième direction (D3) coupant la troisième surface (23), la troisième surface (23) fait en sorte que des ondes électromagnétiques se propageant dans la troisième direction (D3) se propagent dans une quatrième direction (D4) coupant la deuxième surface (22),

la deuxième surface (22) émet des ondes électromagnétiques se propageant dans la quatrième direction (D4) vers la première surface de détection (41),

**caractérisé en ce qu'**il comprend

un deuxième détecteur (50) qui comprend une deuxième surface de détection (51) et détecte des ondes électromagnétiques incidentes sur la deuxième surface de détection (51) ;

dans lequel la troisième surface (23) sépare des ondes électromagnétiques se propageant dans une première direction (D1) coupant la troisième surface (23) en des ondes électromagnétiques destinées à être réfléchies par la troisième surface (23) et incidentes sur le deuxième détecteur (50) et en des ondes électromagnétiques destinées à se propager dans la deuxième direction (D2) coupant la première surface (21).

2. Appareil de détection d'ondes électromagnétiques (1) selon la revendication 1,
comprenant en outre une première unité de formation d'image (31) configurée pour former une image d'ondes électromagnétiques se propageant vers la deuxième unité de propagation (20) et pour faire en sorte que les ondes électromagnétiques soient incidentes sur la deuxième unité de propagation (20).

3. Appareil de détection d'ondes électromagnétiques (1) selon la revendication 2,
dans lequel la première unité de formation d'image (31) est configurée pour former l'image des ondes électromagnétiques sur la surface de référence (11).

4. Appareil de détection d'ondes électromagnétiques (1) selon la revendication 2,
dans lequel la première unité de formation d'image (31) est configurée pour former l'image des ondes électromagnétiques sur la deuxième surface de détection (51) via la troisième surface (23).

5. Appareil de détection d'ondes électromagnétiques (1) selon l'une quelconque des revendications 1 à 4,
comprenant en outre une deuxième unité de formation d'image (32) configurée pour former une image d'ondes électromagnétiques émises depuis la deuxième surface (22) et pour faire en sorte que les ondes électromagnétiques se propagent vers le premier détecteur (40).

6. Appareil de détection d'ondes électromagnétiques (1) selon la revendication 5,
dans lequel la deuxième unité de formation d'image (32) est configurée pour former une image d'ondes électromagnétiques sur la première surface de détection (41).

7. Appareil de détection d'ondes électromagnétiques (1) selon la revendication 6,
dans lequel la longueur du chemin de propagation dans lequel des ondes électromagnétiques se propagent de la troisième surface (23) à la deuxième surface de détection (51) et la longueur du chemin de propagation dans lequel des ondes électromagnétiques se propagent de la troisième surface (23) à la surface de référence (11) sont égales l'une à l'autre.

8. Appareil de détection d'ondes électromagnétiques (1) selon l'une quelconque des revendications 1 à 7,
dans lequel la troisième surface (23) fait en sorte que, parmi des ondes électromagnétiques se propageant dans la première direction (D1), des ondes électromagnétiques contenant une longueur d'onde particulière se propagent vers la deuxième surface de détection (51) et des ondes électromagnétiques contenant d'autres longueurs d'onde se propagent dans la deuxième direction (D2).

9. Appareil de détection d'ondes électromagnétiques (1) selon l'une quelconque des revendications 1 à 8,
dans lequel un angle d'incidence d'ondes électromagnétiques se propageant dans la première direction (D1) par rapport à la troisième surface (23) est inférieur à un angle critique.

10. Appareil de détection d'ondes électromagnétiques (1) selon l'une quelconque des revendications 1 à 9,
dans lequel la première surface (21) fait en sorte que des ondes électromagnétiques ré-incidentes depuis la surface de référence (11) se propagent dans la troisième direction (D3) en transmettant ou en réfractant les ondes électromagnétiques.

11. Appareil de détection d'ondes électromagnétiques (1) selon l'une quelconque des revendications 1 à 10,

dans lequel la deuxième unité de propagation (20) comprend un premier prisme (21a) contenant au moins trois surfaces, et

chacune de la première surface (21), de la deuxième surface (22) et de la troisième surface (23) est incluse dans les surfaces du premier prisme (21a).

12. Appareil de détection d'ondes électromagnétiques (1) selon la revendication 11,
dans lequel la deuxième unité de propagation (20) comprend en outre un séparateur (80) positionné le long de la troisième surface (23).

13. Appareil de détection d'ondes électromagnétiques (1) selon l'une quelconque des revendications 1 à 12,

dans lequel chacun des pixels (12) de la première unité de propagation (10) effectue une transition vers l'un d'un premier état pour faire en sorte que des ondes électromagnétiques incidentes sur la surface de référence (11) se propagent dans une direction prédéterminée et d'un deuxième état pour faire en sorte que des ondes électromagnétiques se propagent dans une direction différente de la direction prédéterminée.

14. Appareil de détection d'ondes électromagnétiques (1) selon la revendication 13,
dans lequel le premier état est associé à un état de transmission pour transmettre des ondes électromagnétiques et le deuxième état est associé à un état de réflexion pour réfléchir des ondes électromagnétiques.

15. Appareil de détection d'ondes électromagnétiques (1) selon l'une quelconque des revendications 1 à 14,
comprenant en outre l'irradiateur (62) configuré pour rayonner des ondes électromagnétiques vers un objet de détection (66) d'un détecteur.

16. Appareil de détection d'ondes électromagnétiques (1) selon la revendication 15,

dans lequel le premier détecteur (40) est configuré pour détecter des ondes réfléchies d'ondes électromagnétiques rayonnées depuis un premier irradiateur, et
le deuxième détecteur (50) est configuré pour détecter des ondes réfléchies d'ondes électromagnétiques rayonnées depuis un deuxième irradiateur.

# FIG. 1

# FIG. 2

# FIG. 3

# FIG. 4

# FIG. 5

# FIG. 6

# FIG. 7

# FIG. 8

# FIG. 9

# FIG. 10

# FIG. 11

# FIG. 12

# FIG. 13

# FIG. 14

# FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2603828 A1

- JP 3507865 B